# EUROPEAN PATENT SPECIFICATION

(11) **EP 1 375 237 B1**
(45) Date of publication and mention of the grant of the patent: **17.05.2006**
(21) Application number: 03017460.1
(22) Date of filing: 10.09.1998
(51) Int. Cl.: B60W 10/04, B60K 6/04

(54) **Controlling apparatus for a hybrid car**
Vorrichtung zur Steuerung eines Hybridfahrzeuges
Dispositif de contrôle pour un véhicule hybride

(30) Priority: 15.09.1997 JP 26938297; 16.09.1997 JP 26940397; 07.07.1998 JP 19218598
(43) Date of publication of application: 02.01.2004
(62) Divisional of application: 98117159.8
(73) Proprietor: HONDA GIKEN KOGYO KABUSHIKI KAISHA, Minato-ku, Tokyo (JP)
(72) Inventor: Otsu, Atsushi, Wako-shi Saitama (JP); Takeda, Toru, Wako-shi Saitama (JP); Suzuki, Osamu, Wako-shi Saitama (JP); Hatanaka, Kaoru, Wako-shi Saitama (JP)
(74) Representative: Liska, Horst

(56) References cited:
- EP-A- 0 725 474
- EP-A- 0 729 858
- US-A- 4 335 429

## Description

This invention relates to a a hybrid car driving apparatus provided with an internal combustion engine and electric generator-motor.

A controlling apparatus for a conventional hybrid car wherein an operation amount of an accelerator pedal by a driver during running of the vehicle is detected by an accelerator sensor and an engine torque is calculated from a throttle opening based on the detection signal and an engine revolution number based on a signal detected by a pulser provided on a crankshaft of an engine, and regeneration current of a motor is calculated so that, when the calculated torque is lower than a fuel consumption optimum torque upon the revolution number, the throttle opening may be increased by a difference between them and a torque corresponding to the difference may be generated to control the engine and the motor is disclosed in the official gazette of Japanese Patent Laid-Open Application No. Heisei 5-22931.

Since the conventional hybrid car employs a controlling method wherein the two different power sources of the engine and the motor are combined and a driving output torque and/or a revolution number of each of the power sources are calculated, and calculation is performed based on the detected signals to compensate for a torque difference based on a result of the calculation or change over between the two different power sources depending upon the vehicle speed or the like, it has such subjects as described below.

The conventional hybrid car has a subject in that, where the opening degree of the throttle is controlled based on a signal from the accelerator sensor and the revolution number signal of the engine to attain a torque requested by a driver, the output torque amount of the engine is different depending upon the condition in which the engine is used such as whether it is cold or hot, an individual difference of the engine and so forth, by which the running driving torque amount with respect to the accelerator is varied.

The conventional hybrid car has another subject in that, by control based merely on signals of the accelerator sensor and the engine revolution number, with the two power sources of different characteristics of the engine which has a long response time until a required torque is reached and exhibits a moderate startup and the motor which has a short response time and exhibits a rapid startup, the running driving force is discontinuous and lacks in smoothness.

The conventional hybrid car has a further subject in that, where a torque is to be detected from a driving power outputting element of each of the two power sources of the engine and the motor, when the use condition is cold, torque calculations for the engine which exhibits a large torque variation and the motor which exhibits a small torque variation must be processed at a time.

Where torque sensors are used individually for the driving power outputting elements of the two power sources of the engine and the motor, the conventional hybrid car has a still further subject in increase of the number of parts, an increase of a mounting space and so forth.

Known from U.S. 4,335,429 is a generic hybrid vehicle which comprises an internal combustion eingine and two generator-motors which are controlled by a microcomputer based on the required torque of the vehicle as a function of time. When the engine is permitted to run, it is always operated in that region which minimizes fuel consumption. If the torque of the engine is too low to drive the vehicle, at least one of the generator-motors is energized to make up for the deficiency. The engine and the generator-motors are coupled via a clutch mechanism controlled by the microcomputer. A first speed sensor and a first torque sensor are coupled to the output shaft of the engine and a second speed sensor as well as a second torque sensor are coupled to the output shaft of the vehicle. The engine comprises a throttle control sensing the operation amount of an accelerator pedal. The microcomputer calculates the required torque on the basis of the amount of operation of the accelerator pedal and the speed of the output shaft of the vehicle. If a brake pedal is actuated, the microcomputer controls the generator-motors to generate regeneration current to charge a battery.

It is an object of the invention to provide a hybrid car driving apparatus both the running driving torque of which and the generation of regeneration current can change smoothly.

A hybrid vehicle driving apparatus according to the invention is characterized by claim 1. In the claims and throughout the description, the term "aimed" as in "aimed torque", for example, is synonymous with the expression "target", for example, "target torque".

A controlling apparatus as used in the hybrid car driving apparatus according to the invention comprises aimed torque calculation means for calculating an aimed torque based on an accelerator operation amount signal from an accelerator sensor for detecting an accelerator operation amount of a driver and a vehicle speed signal from a vehicle speed sensor for detecting a speed of the vehicle, and torque detection means provided at or downstream of a joining portion of driving output power of an engine and a generator-motor for detecting an actual torque, and the engine includes aimed opening means for calculating an aimed opening based on an aimed torque signal and an engine revolution signal and is controlled based on an aimed opening signal from the aimed opening means while the generator-motor is controlled based on the aimed torque signal and an actual torque signal.

With the controlling apparatus for a hybrid car, claim since the engine includes the aimed opening means for calculating an aimed opening based on the aimed torque signal and the engine revolution signal and is controlled based on the aimed opening signal from the aimed opening means while the generator-motor is controlled based on the aimed torque signal and an actual torque signal, a linearity of the running driving torque can be obtained. Further, without using torque sensors individually for the power sources, reduction in cost can be performed.

Further, a controlling apparatus for a hybrid car is characterized in that the engine includes a throttle, a pulser for detecting a number of revolutions, engine revolution number detection means for detecting a number of revolutions of the engine from the pulser, and aimed opening calculation means for calculating an opening of the throttle, and calculates, based on the aimed torque signal and the engine revolution number signal, a throttle opening, based on which a fuel injection amount is controlled, while the generator-motor includes a generator for generating regeneration current by rotation from the drive shaft, and motor control means for controlling a motor based on the aimed torque signal and the actual torque signal, and driving of the generator-motor is controlled based on a driving control signal from the motor controlling means.

With the controlling apparatus for a hybrid car since the engine calculates, based on the aimed torque signal and the engine revolution number signal, a throttle opening, based on which the fuel injection amount is controlled, while the generator-motor includes a generator for generating regeneration current by rotation from the drive shaft, and motor control means for controlling a motor based on the aimed torque signal and the actual torque signal, and driving of the generator-motor is controlled based on a driving control signal from the motor controlling means, a linearity of the running driving torque which has a short response time and is quick can be obtained.

Meanwhile, a controlling apparatus for a hybrid car is characterized in that it comprises assist discrimination means for additionally using or changing over the driving output power of the generator-motor in response to the driving output power of the engine.

With the controlling apparatus for a hybrid car, since it comprises the assist discrimination means for additionally using or changing over the driving output power of the generator-motor in response to the driving output power of the engine, even during regeneration control, the running driving torque which exhibits a short response time and is quick can be kept stable.

Embodiments of the present invention are described below with reference to the accompanying drawings. It is to be noted that the drawings should each be viewed in the direction of reference symbols.
FIG. 1 is a side elevational view of a hybrid car according to the present invention.
FIG. 2 is a side elevational view of a driving system unit of the hybrid car according to the present invention.
FIG. 3 is a sectional view of a driving force transmission apparatus of the hybrid car according to the present invention.
FIG. 4 is a sectional view of an engine of the hybrid car according to the present invention.
FIG. 5 is a diagram illustrating first operation of the driving force transmission apparatus according to the present invention.
FIG. 6 is a diagram illustrating second operation of the driving force transmission apparatus according to the present invention.
FIG. 7 is a diagram illustrating third operation of the driving force transmission apparatus according to the present invention.
FIG. 8 is a sectional view of a torque sensor unit of the driving force transmission apparatus according to the present invention.
FIG. 9 is a diagram illustrating operation of the torque sensor unit according to the present invention.
FIG. 10 is a block diagram of an entire construction of a form of a hybrid car according to the present invention.
FIG. 11 is a block diagram of a construction of essential part of a form of management control means of the motor controlling apparatus for a hybrid car according to the present invention.
FIG. 12 is a diagram illustrating a mode changeover switch.
FIG. 13 is a diagram illustrating driving regions of an engine and a motor in the hybrid car according to the present invention.
FIG. 14 is a block diagram of a construction of essential part of a form of motor control means of the motor controlling apparatus for a hybrid car according to the present invention.
FIG. 15 is a circuit diagram of driving means according to the present invention.
FIG. 16 is a diagram illustrating a relationship among an aimed current signal, a motor current detection signal and an oscillation control signal according to the present invention.
FIG. 17 is a flow chart of operation of torque feedback control means and mode control means.
FIG. 18 is a flow chart of discrimination among a driving logic mode, a lead angle mode and a regeneration logic mode.
FIG. 19 illustrates a motor torque characteristic with respect to a lead angle value of the motor.
FIG. 20 is a waveform diagram of three-phase driving signals of the driving means.
FIG. 21 is a flow chart of operation of the management control means.
FIG. 22 is a diagram of ON/OFF discrimination of the engine.
FIG. 23 is a characteristic diagram of a battery remaining amount and a throttle opening (accelerator opening) threshold value.
FIG. 24 is a diagram of ON/OFF discrimination of the engine.
FIG. 25 is another diagram illustrating driving regions of the engine and the motor of the hybrid car according to the present invention.
FIG. 26 is a flow chart of operation of current/torque feedback control means.
FIG. 27 is a block diagram of a construction of essential part of a form of current feedback control means according to the present invention.
FIG. 28 is a block diagram of a construction of essential part of a form of torque feedback control means according to the present invention.
FIG. 29 is a waveform diagram of a duty pulse.
FIG. 30 is a diagram of a basic concept of control of the motor controlling apparatus for a hybrid car according to the present invention.
FIG. 31 is a block diagram of a controlling apparatus for a hybrid car according to claim 1.
FIG. 32 is a block diagram of a controlling apparatus for a hybrid car according to claim 2.
FIG. 33 is a block diagram of essential part of assist discrimination means of a controlling apparatus for a hybrid car according to claim 3.
FIG. 34 is a characteristic diagram corresponding to an accelerator signal A and a vehicle speed signal V.
FIG. 35 is a characteristic diagram corresponding to an engine revolution number signal N and an engine requested torque signal Tt.
FIG. 36 is a control flow chart of torque amount feedback according to the present invention.

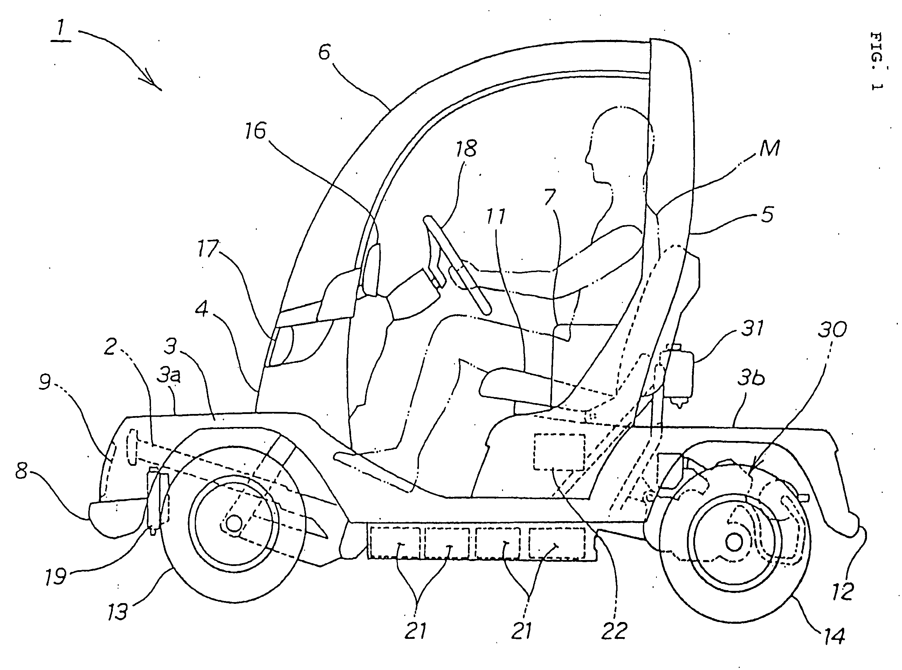

FIG. 1 is a side elevational view of a hybrid car according to the present invention.

The hybrid car 1 includes a body frame 2, a body 3 mounted on the body frame 2, a front cover 4 extending upwardly from a front portion of a central portion of the body 3, a center pillar 5 extending upwardly from a rear portion of a central portion of the body 3, a transparent roof 6 extending from an end of the center pillar 5 to the front cover 4, side protectors 7, 7 (7 in the interior is omitted) mounted on the opposite sides of the center pillar 5, a front bumper 8 provided on a front face of the body 3, a radiator grill 9 provided immediately rearwardly of the front bumper 8, a driver's seat 11 mounted in the inside of the center of the body 3, a rear bumper 12 provided at a rear portion of the body 3, front wheels 13, 13 (13 in the interior is omitted) mounted on the body frame 2, rear wheels 14, 14 as driving wheels mounted on the body frame 2, side mirrors 16, 16 (16 in the interior is omitted) provided on the opposite sides of the transparent roof 6, lamps 17, 17 provided on the opposite sides of the front cover 4, a steering wheel 18 provided at the center of the body 3, a radiator 19 mounted rearwardly of the radiator grill 9, batteries ... 21 (... denotes a plural number. This similarly applies to the following description.) mounted at a central portion of the body frame 2, a control unit 22 disposed below the driver's seat 11, and a driving system unit 30 carried at a rear portion of the body frame 2. Reference symbol M denotes a driver.

It is to be noted that reference symbol 3a denotes a front deck portion and 3b denotes a rear deck portion, and a person can ride on the deck portions 3a, 3b and can enter to the driver's seat 11 readily from forwardly and from rearwardly through the deck portions 3a, 3b.

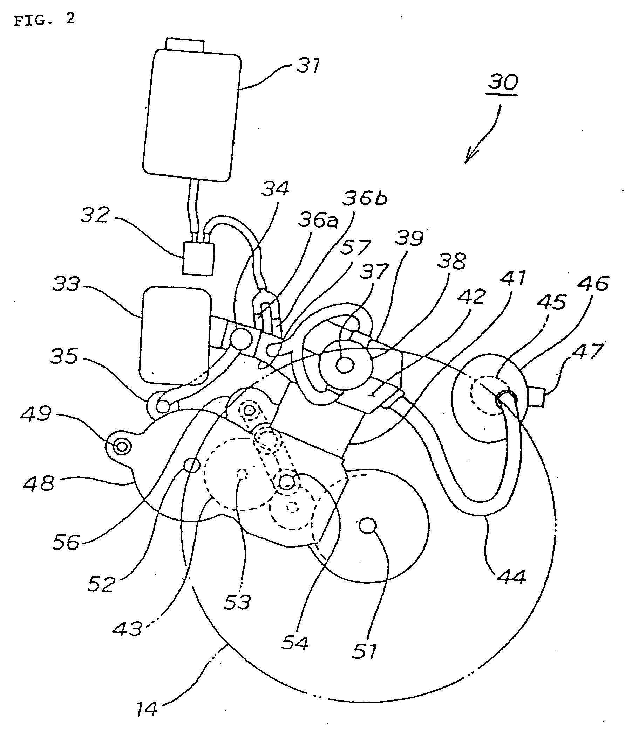

FIG. 2 is a side elevational view of the driving system unit of the hybrid car according to the present invention and shows principal components of the driving system unit 30.

In particular, reference symbol 31 denotes a fuel tank, 32 a fuel pump, 33 an air cleaner, 34 a throttle pulley, 35 a servo motor, 36a an additional supplying injector, 36b a main injector, 37 a cam shaft, 38 a mechanical pump which rotates integrally with the cam shaft 37, 39 a head cover, 41 a cylinder block, 42 a cylinder head, 43 a motor as a generator-motor, 44 an exhaust pipe, 45 a metal catalyzer, 46 a muffler, 47 a tail pipe, 48 a cone-type non-stage transmission as a transmission, 49 a pivot shaft, 51 a rear axle, 52 a non-stage transmission shaft, 53 a motor shaft as a driving force joining point, 54 a crankshaft, 56 a sel-motor, and 57 an intake manifold.

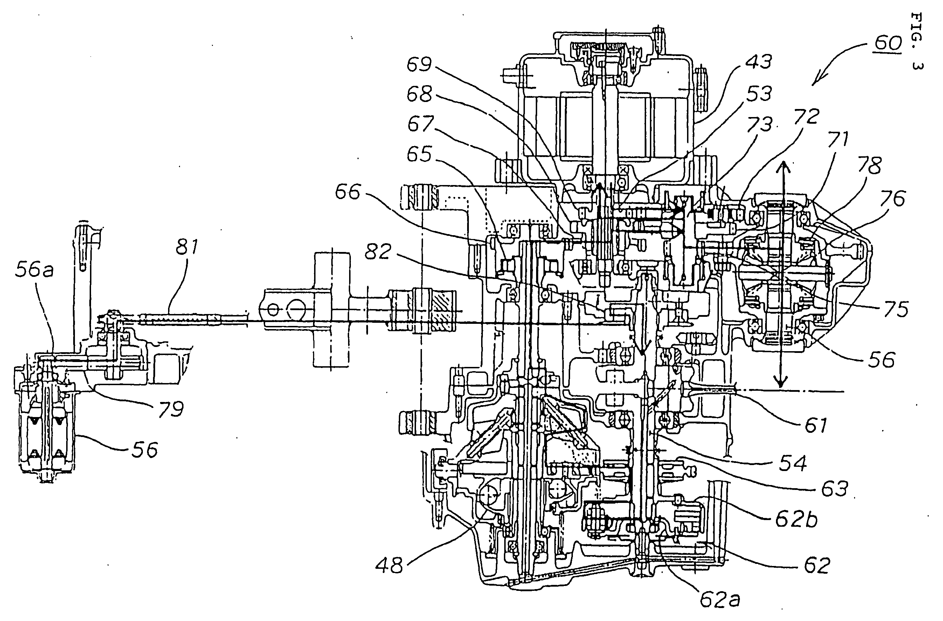

FIG. 3 is a sectional view of a driving force transmission apparatus of the hybrid car according to the present invention.

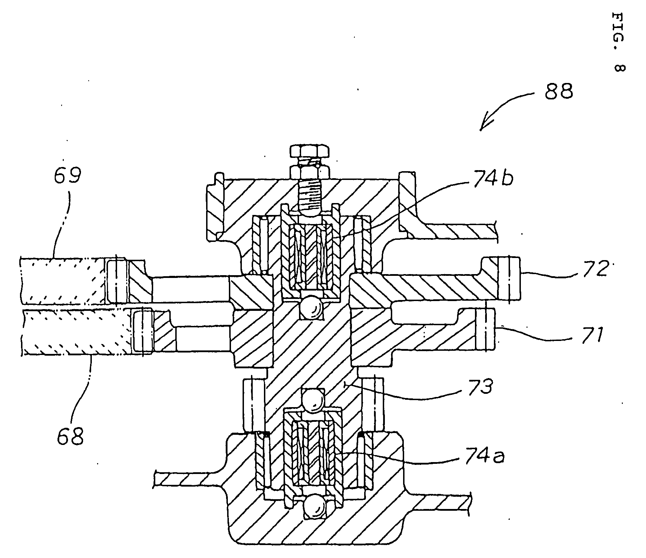

The driving force transmission apparatus 60 of the hybrid car 1 (refer to FIG. 1) includes an engine 61, an inner member 62a of a centrifugal clutch 62 mounted on the crankshaft 54 of the engine 61, an outer member 62b of the centrifugal clutch 62 with and from which the inner member 62a is engaged and disengaged, the cone-type non-stage transmission 48 connected to the outer member 62b through a torque limiter 63, a first transmission gear 66 connected to the cone-type non-stage transmission 48 through a one-way clutch 65, the motor 43 for driving the hybrid car 1 (refer to FIG. 1) together with the engine 61, the motor shaft 53 which serves as a joining point of driving forces, a second transmission gear 67 mounted on the motor shaft 53 and held in meshing engagement with the first transmission gear 66, an engine side first helical gear 68 and a motor side first helical gear 69 mounted on the motor shaft 53, an engine side second helical gear 71 and a motor side second helical gear 72 held in meshing engagement with the gears 68, 69, respectively, a countershaft 73 for supporting the gears 71, 72, pressure sensors 74a, 74b (refer to FIG. 8) mounted at the opposite ends of the countershaft 73, an output gear 75 mounted on the countershaft 73, a propeller shaft 76 connected to the output gear 75, the rear axle 51 connected to the propeller shaft 76 through a differential gear 78, and the rear wheels 14 (refer to FIG. 1) mounted on the rear axle 51.

The sel-motor 56 rotates the crankshaft 54 connected to a motor shaft 56a thereof through a belt 79, a chain 81 and a one-way clutch 82.

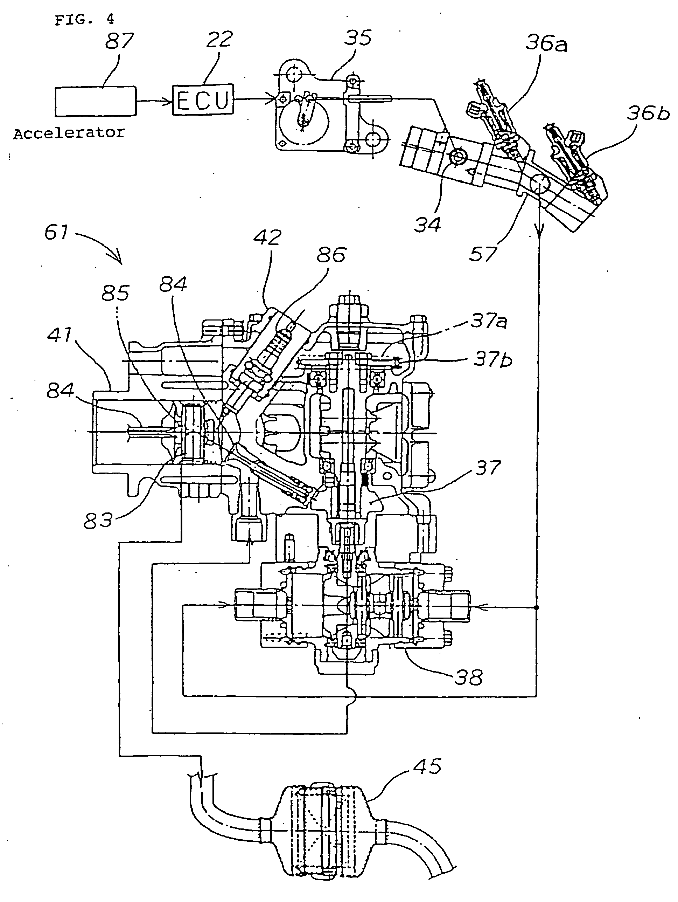

FIG. 4 is a sectional view of the engine of the hybrid car according to the present invention.

The engine 61 includes the cylinder block 41, a piston 83 fitted for back and forth movement in the cylinder block 41, a connecting rod 84 on which the piston 83 is mounted, the cylinder head 42 fitted on the cylinder block 41, an intake auxiliary valve 84 and an exhaust valve 85 provided on the cylinder head 42, and a spark plug 86 mounted on the cylinder head 42, and includes the mechanical pump 38 which rotates coaxially with the camshaft 37. It is to be noted that reference symbol 37a denotes a cam chain, and 37b denotes a cam sprocket wheel.

By adjusting the throttle pulley 34 through the control unit 22 and the servo motor 35 by an opening of an accelerator 87, the supply amount of fuel air mixture is adjusted to control the output power of the engine 61.

During running only with the motor, if a request for the engine output power is issued when the accelerator 87 is open, the throttle pulley 34 is tightened by the servo motor 35 irrespective of the accelerator opening to make the starting of the engine 61 better.

Meanwhile, part of the fuel air mixture supplied from the injector 36a is branched from the intake manifold 37 and additionally supplied by the mechanical pump 38 so as to be injected into the cylinder block 41 from the intake auxiliary valve 84 immediately prior to ignition to augment the engine output power.

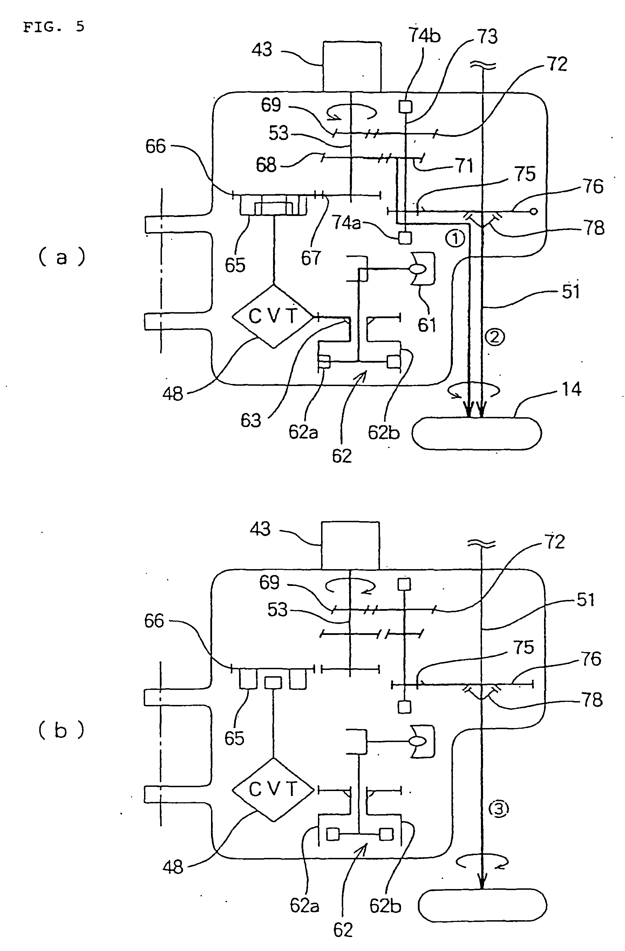

Operation of the driving force transmission apparatus 60 of the hybrid car 1 (refer to FIG. 1) described above is described with reference to FIGS. 5 to 7.

(a), (b) of FIG. 5 are diagrammatic views of first operation of the driving force transmission apparatus according to the present invention.

(a) of FIG. 5 illustrates a case wherein the rear wheels 14 are driven by a joined force of the engine 61 and the motor 43.

The engine 61 drives the rear wheels 14 through the inner member 62a of the centrifugal clutch 62, outer member 62a, cone-type non-stage transmission 48, one-way clutch 65, first transmission gear 66, second transmission gear 67 and engine side first helical gear 68 mounted on the motor shaft 53 which makes a joining point with the driving force of the motor 43, engine side second helical gear 71, output gear 75, propeller shaft 76, differential gear 78 and rear axle 51 in this order as indicated by an arrow mark ①.

Meanwhile, the motor 43 drives the rear wheels 14 through the motor shaft 53, motor side first helical gear 69, motor side second helical gear 72, output gear 75, propeller shaft 76, differential gear 78 and rear axle 51 in this order as indicated by an arrow mark ②.

The driving force of the engine 61 and the driving force of the motor 43 are joined together at the motor shaft 53.

when the hybrid car 1 is to be started with the engine 61, the torque can be transmitted gradually and smoothly through the centrifugal clutch 62 to start the hybrid car 1 (refer to FIG. 1).

Since the centrifugal clutch 62 is disposed in a stage preceding to the cone-type non-stage transmission 48, it may have a smaller clutch capacity than where it is disposed in a stage next to the cone-type non-stage transmission 48. On the contrary, as viewed from the cone-type non-stage transmission 48 side, since it need not receive an excessive torque of the engine 61 directly, also protection of the cone-type non-stage transmission 48 can be anticipated. Particularly where the clutch employed is of the wet type, since the contacting pressure is reduced, if the centrifugal clutch 62 is disposed in a stage following the cone-type non-stage transmission 48, then a large clutch capacity is required and the apparatus becomes large in size.

Since the cone-type non-stage transmission 48 is connected to the outer member 62b of the centrifugal clutch 62 through the torque limiter 63, the engine 61 need not receive back torque from the rear wheels 14.

(b) of FIG. 5 illustrates a case wherein the rear wheels 14 are driven only with the motor 43.

The motor 43 drives the rear wheels 14 through the motor shaft 53, motor side first helical gear 69, motor side second helical gear 72, output gear 75, propeller shaft 76, differential gear 78, and rear axle 51 in this order as indicated by an arrow mark ③.

Since the engine 61 is stopped, the one-way clutch 65 is put into an open condition.

Since the one-way clutch 65 is disposed immediately prior to the joining point with the driving force of the motor 43, when the rear wheels 14 are driven only with the motor 43, the cone-type non-stage transmission 48, the outer member 62b of the centrifugal clutch 62 and so forth which serve as the load side are not rotated together at all. Accordingly, the consumption of the batteries 21 can be saved, and a longer operation time can be secured.

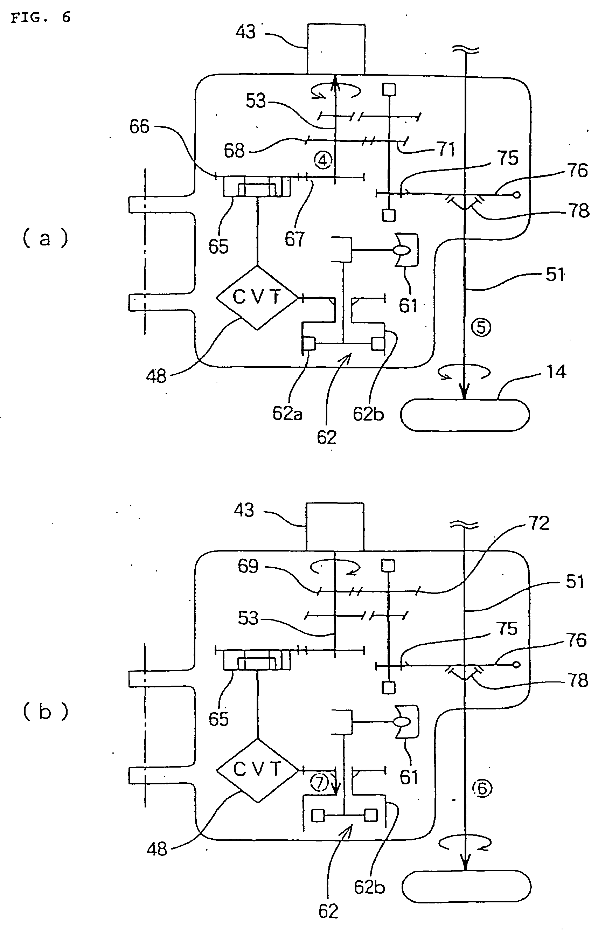

(a), (b) of FIG. 6 are diagrammatic views of second operation of the driving power transmission apparatus according to the present invention.

(a) of FIG. 6 illustrates a case wherein the rear wheels 14 are driven only with the engine 61.

The engine 61 drives the motor shaft 53 through the inner member 62a of the centrifugal clutch 62, outer member 62a, cone-type non-stage transmission 48, one-way clutch 65, first transmission gear 66, and second transmission gear 67 in this order as indicated by an arrow mark ④. In other words, the motor 43 can be caused to act as a generator to charge the batteries 21 (refer to FIG. 1).

Further, the engine 61 drives the rear wheels 14 through the engine side first helical gear 68, engine side second helical gear 71, output gear 75, propeller shaft 76, differential gear 78, and rear axle 51 in this order as indicated by an arrow mark ⑤.

(b) of FIG. 6 illustrates a case wherein the hybrid car 1 (refer to FIG. 1) is driven to run backwardly with the motor 43.

The motor 43 is driven to rotate reversely and the reverse rotation is transmitted to the rear wheels 14 through the motor shaft 53, motor side first helical gear 69, motor side second helical gear 72, output gear 75, propeller shaft 76, differential gear 78, and rear axle 51 in this order as indicated by an arrow mark to reversely rotate the rear wheels 14.

Since the motor 43 rotates reversely while the engine 61 is stopped, the one-way clutch 65 is connected and the driving force of the motor 43 is transmitted up to the cone-type non-stage transmission 48 and the outer member 62b of the centrifugal clutch 62 as indicated by an arrow mark ⑦, but the engine 61 is not rotated together due to the presence of the centrifugal clutch 62.

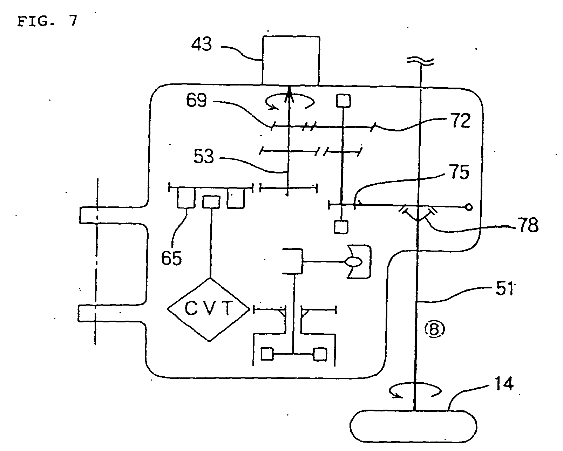

FIG. 7 is a diagrammatic view illustrating third operation of the driving power transmission apparatus according to the present invention, and illustrates a flow of driving force upon deceleration of the hybrid car 1 (refer to FIG. 1).

Upon deceleration of the hybrid car 1 (refer to FIG. 1), driving force is transmitted to the motor 43 through the rear wheels 14, rear axle 51, differential gear 78, propeller shaft 76, motor side second helical gear 72, motor side first helical gear 69, and motor shaft 53 in this order as indicated by an arrow mark ⑧, and the motor 43 acts as a generator. In this instance, since the one-way clutch 65 is put into an open condition, the driving force upon deceleration can be transmitted effectively to the motor 43 and the batteries 21 (refer to FIG. 1) can be charged.

FIG. 8 is a sectional view of the torque sensor unit of the driving force transmission apparatus according to the present invention.

The torque sensor unit 88 includes the countershaft 73, the pressure sensors 74a, 74b mounted at the opposite ends of the countershaft 73, the engine side second helical gear 71 and the motor side second helical gear 72 mounted on the countershaft 73, and the engine side first helical gear 68 and the motor side first helical gear 69 held in meshing engagement with the gears 71, 72, respectively, all described hereinabove, and operation of the torque sensor unit 88 is described below with the following figure.

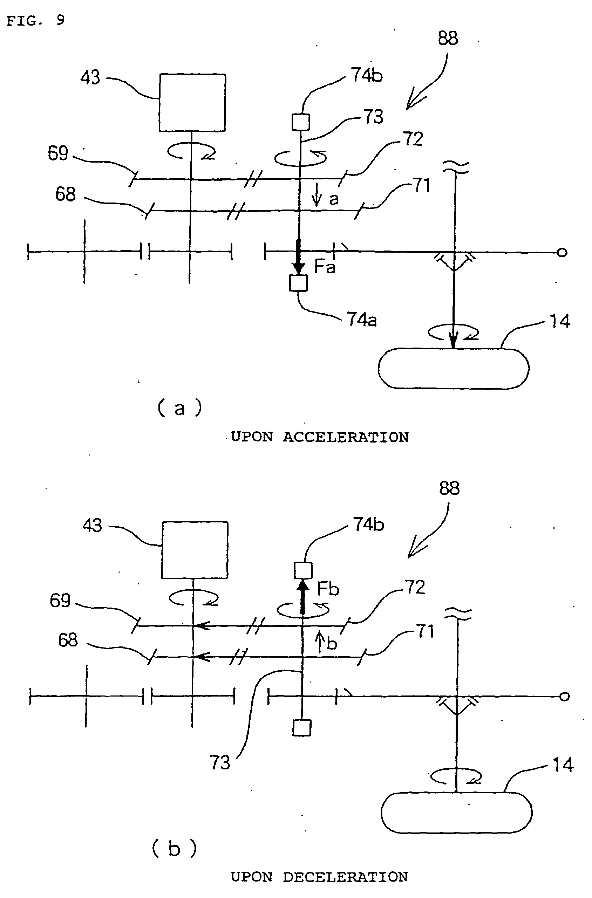

(a), (b) of FIG. 9 are diagrammatic views illustrating operation of the torque sensor unit 88 according to the present invention.

(a) of FIG. 9 illustrates operation of the torque sensor unit 88 upon acceleration.

Upon acceleration, driving force is transmitted from the engine 61 (refer to FIG. 3) or the motor 43 side to the rear wheels 14. In particular, since the engine side first helical gear 68 and the motor side first helical gear 69 serve as the driving side while the engine side second helical gear 71 and the motor side second helical gear 72 serve as driven side, the gears 71, 72 cause the countershaft 73 to generate a stress Fa as indicated by an arrow mark a. This stress Fa is detected by the pressure sensor 74a.

(b) of FIG. 9 illustrates operation of the torque sensor unit 88 upon deceleration.

Upon deceleration, driving force is transmitted from the rear wheels 14 side to the motor 43 side. In particular, since the engine side second helical gear 71 and the motor side second helical gear 72 serve as the driving side while the engine side first helical gear 68 and the motor side first helical gear 69 serve as driven side, the gears 68, 69 cause the countershaft 73 to generate a stress Fb as indicated by an arrow mark b. This stress Fb is detected by the pressure sensor 74b.

In particular, by detecting the magnitude and the direction of transmission of driving force by the pressure sensors 74a, 74b and using them for feedback control such that the driving forces of the engine 61 and the motor 43 (refer to FIG. 2) which are driving sources are combined, the hybrid car 1 (refer to FIG. 1) can be driven efficiently.

Since the torque sensor unit 88 is composed of the countershaft 73, pressure sensors 74a, 74b mounted at the opposite ends of the countershaft 73, engine side second helical gear 71 and motor side second helical gear 72 mounted on the countershaft 73, and engine side first helical gear 68 and motor side first helical gear 69 held in meshing engagement with the gears 71, 72, respectively, a torque detection mechanism which is compact and high in reliability can be implemented.

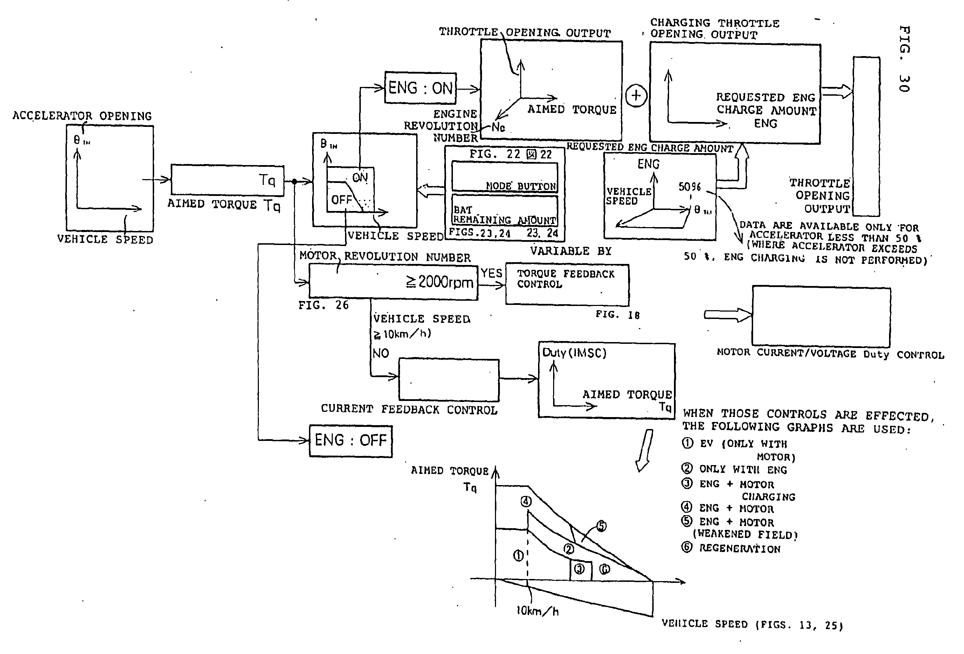

FIG. 30 shows a diagram of a basic concept of control of the motor controlling apparatus for a hybrid car according to the present invention, and a detailed form of the control is described below.

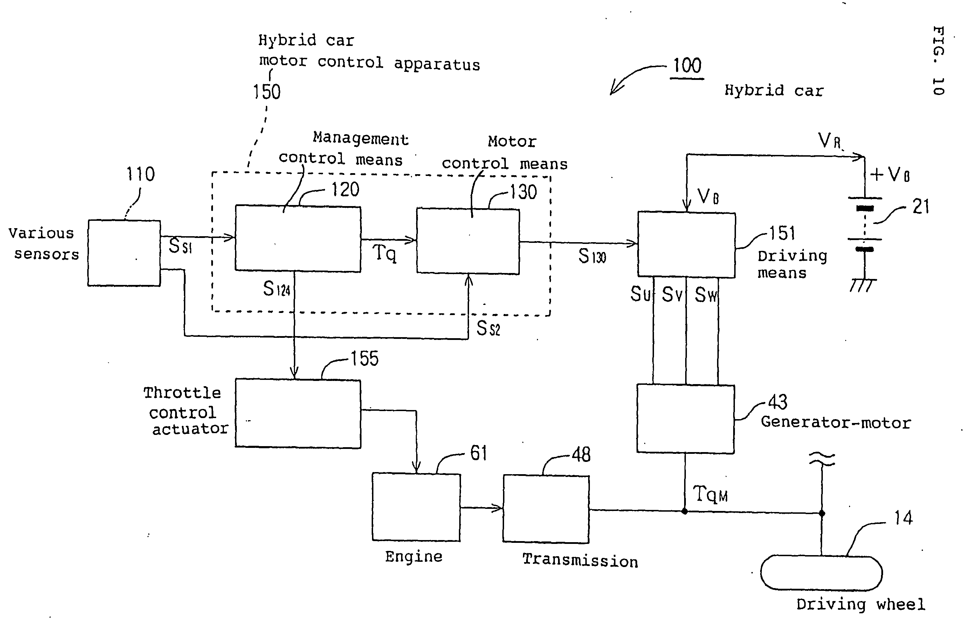

FIG. 10 is a block diagram of an entire form of a hybrid car according to the present invention.

Referring to FIG. 10, the hybrid car 100 includes driving wheels 14, a generator-motor 43, a cone-type non-stage transmission 48, an engine 61, various sensors 110, batteries 21, a hybrid car motor control apparatus 150, driving means 151, and a throttle control actuator 155.

The various sensors 110 output sensor signals SS to management control means 120 of the hybrid car motor control apparatus 150.

The management control means 120 outputs a toque instruction value Tq obtained by processing based on the sensor signal SS1 to motor control means 130, and outputs a throttle aimed opening signal S124 to the throttle control actuator 155.

The motor control means 130 outputs a control signal S130 obtained by processing based on the toque instruction value Tq and the sensor signal SS2 to the driving means 151.

The driving means 151 outputs driving signals (SU, SV, SW) obtained based on the control signal S130 and the battery voltage VB to the generator-motor 43.

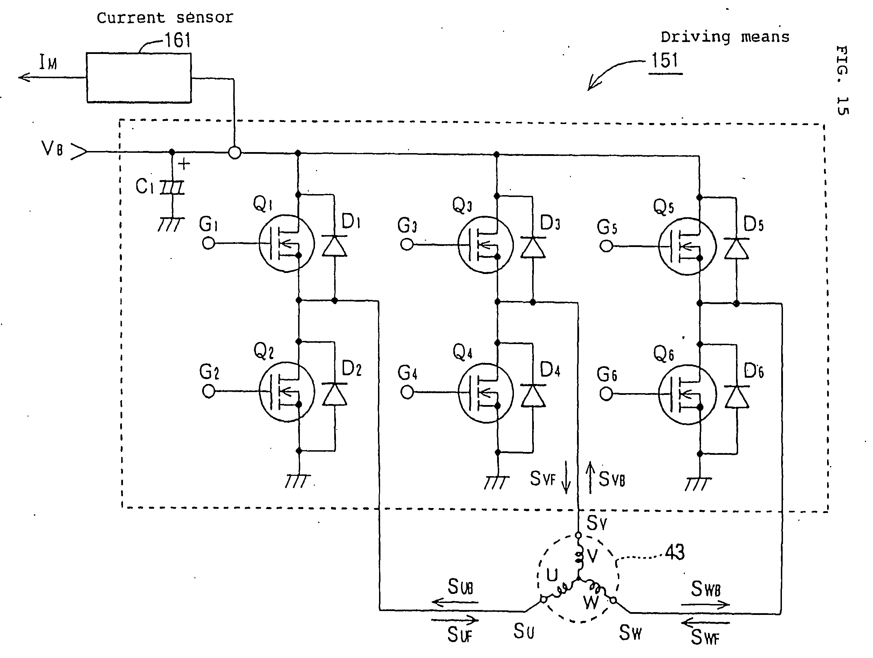

The generator-motor 43 is driven or regenerates when the driving signals (SU, SV, SW) are provided to coils of three phases of a U phase, a V phase and a W phase illustrated in FIG. 15, and outputs motor torque TqM to the driving wheels or charges the batteries 21 with regeneration power VR.

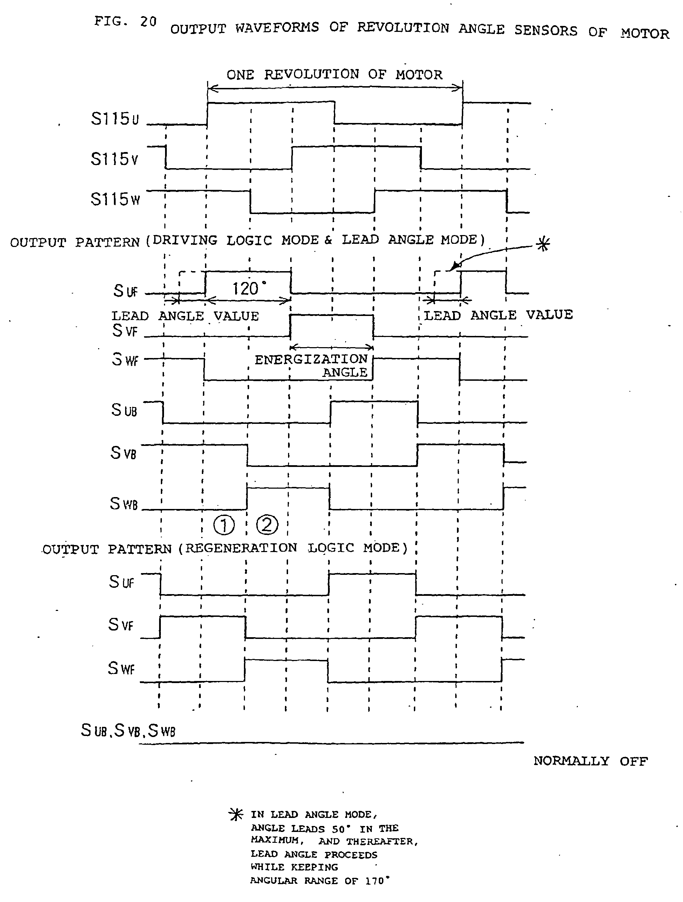

Here, the driving signals SU, SV, SW are described with reference to FIG. 20.

Referring to FIG. 20, reference symbols SUF, SVB, SWF, SUB, SVF, SWB denote the directions of the driving signals SU, SV, SW illustrated in FIG. 15, and for example, reference symbol SUF denotes a driving signal SU which is supplied from the batteries 21 to the U-phase of the generator-motor 43 when an FET Q1 of the driving means 151 is on, and SUB denotes a driving signal SU which flows from the U-phase of the generator-motor 43 to the ground (ground) when another FET Q2 of the driving means 151 is on.

Similarly, a driving signal SV which flows from the batteries 21 to the V-phase of the generator-motor 43 when a further FET Q3 of the driving means 151 is on is denoted by SVF; a driving signal SV which flows from the V-phase of the generator-motor 43 to the ground (ground) when a still further FET Q4 is on is denoted by SVB; a driving signal SW which is supplied from the batteries 21 to the W phase of the generator-motor 43 when a yet further FET Q5 of the driving means 151 is on is denoted by SWF; and a driving signal SW which flows from the W phase of the generator-motor 43 to the ground (ground) when a yet further FET Q6 is on is denoted by SWB.

From the foregoing, within a period ① shown in FIG. 20, the FET Q1 and the FET Q4 are in an on state, and the driving signal SUF flows to the U phase of the generator-motor 43 through the batteries 21 → FET Q1, and the driving signal SVB flows to the ground (ground) through the V phase of the generator-motor 43 → FET Q4.

In this manner, the current (driving signal) within the period ① flows from the U phase of the U phase, V phase and W phase of the three-phase coils of the generator-motor 43 to the V phase.

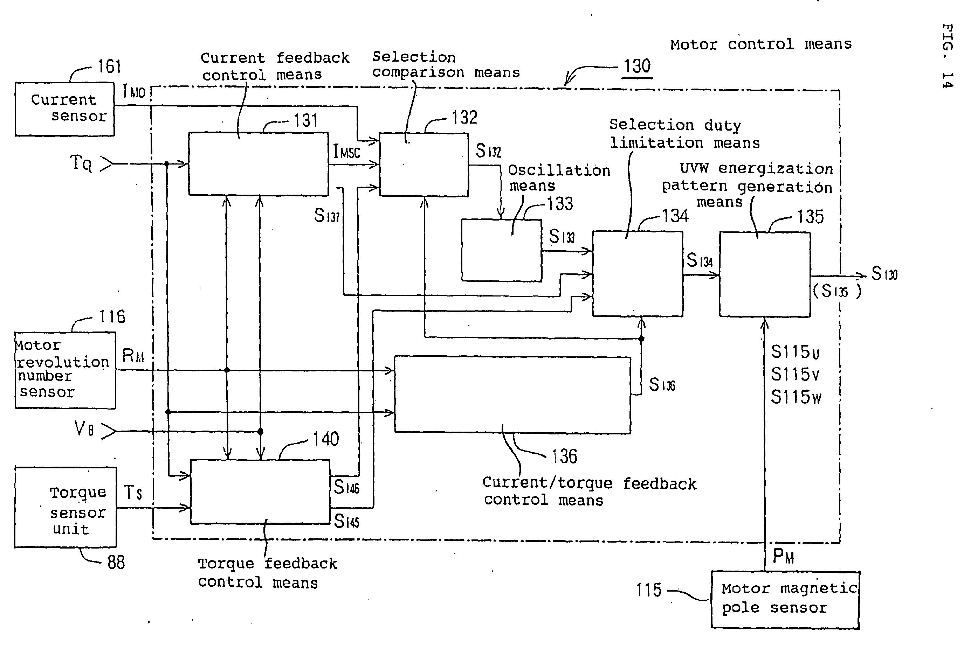

This is synchronized with a rising edge of a magnetic pole position signal PM (115U) from a motor magnetic pole sensor 115 (Fig. 14) of the generator-motor 43.

In short, the signal S115U detects an energization timing to the U phase, and control to cause current to flow from the coil of the U phase to the coil of the V phase is executed by UVW energization pattern generation means 135.

On the other hand, within another period ②, the FET Q6 is turned on in place of the FET Q4 (the FET Q4 is in an off state) and the driving signal SWB flows, and the flow of the current (driving signal) from the U phase to the V phase is switched from the U phase to the V phase.

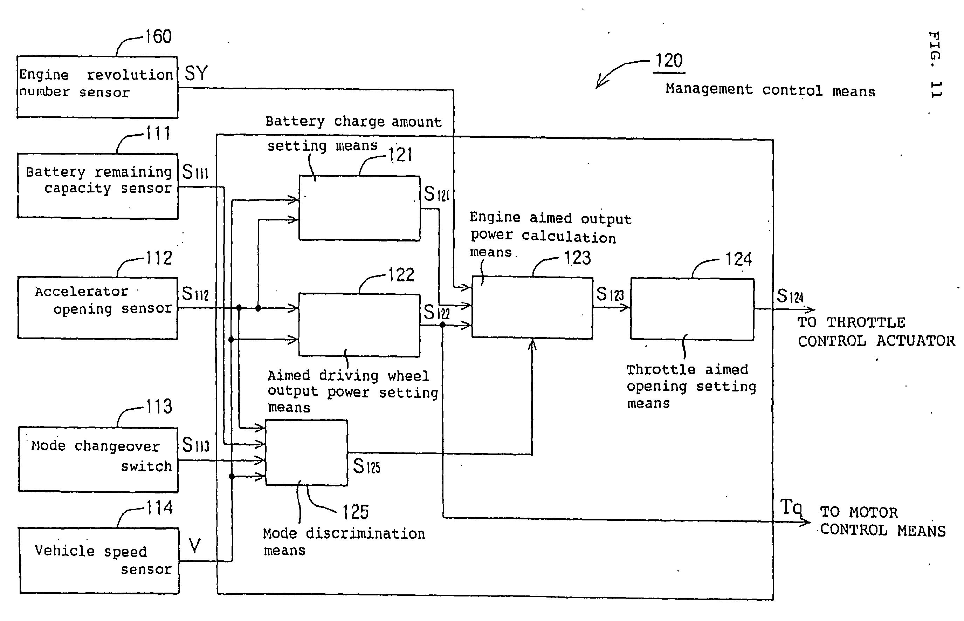

FIG. 11 is a block diagram of essential part of a form of the management control means of the motor controlling apparatus for a hybrid car according to the present invention.

Referring to FIG. 11, the management control means 120 includes battery charge amount setting means 121, aimed rear wheel output power setting means 122, engine aimed output power calculation means 123, throttle aimed opening setting means 124, and mode discrimination means 125.

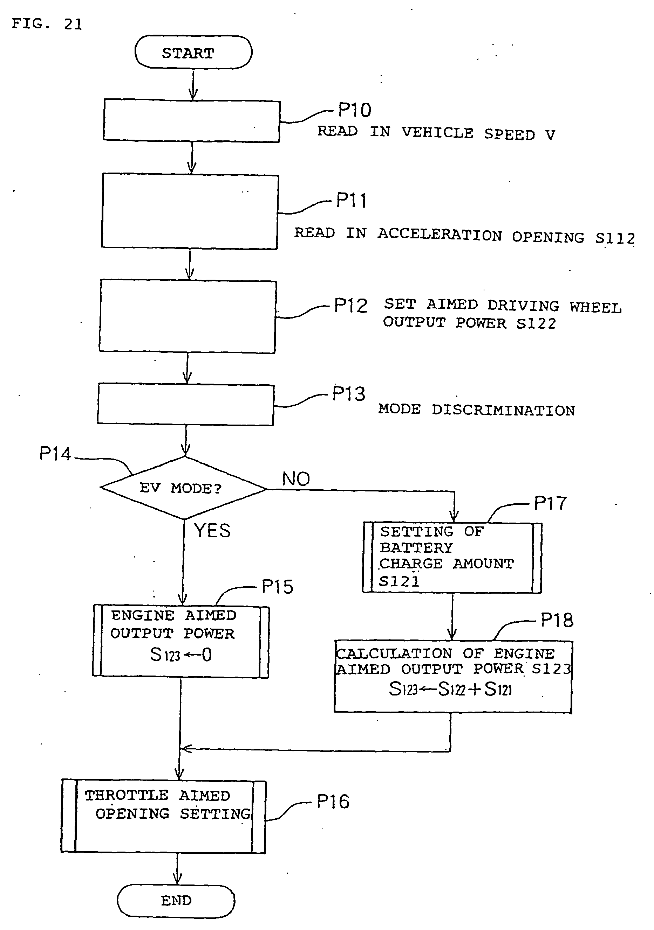

It is to be noted that operation described below is illustrated in an operation flow chart of the management control means in FIG. 21.

An engine revolution number sensor 160 detects a revolution number of the engine and supplies a revolution number signal SY to the engine aimed output power calculation means 123.

A battery remaining capacity sensor 111 outputs a battery remaining capacity signal S111 obtained by detecting the remaining capacity of the batteries 21 to the mode discrimination means 125.

The battery charge amount setting means 121 is formed from a memory such as a ROM and stores in the ROM thereof charging engine aimed output data required for the batteries 21 corresponding to an accelerator opening signal S112 and a vehicle speed signal V in advance, and outputs a battery charge amount signal S121 obtained by reading out the charging engine aimed output data using the accelerator opening signal S112 and the vehicle speed signal V as an address to the engine aimed output power calculation means 123.

It is to be noted that the data stored in the ROM are stored only for a region wherein the accelerator opening is lower than 50 % so that engine charging may be performed only in a region in which the engine efficiency is high.

An accelerator opening sensor 112 outputs an accelerator opening signal S112 obtained by detecting an operation amount (opening) of an accelerator pedal not shown to the battery charge amount setting means 121, the aimed driving wheel output power setting means 122 and the mode discrimination means 125.

A vehicle speed sensor 114 outputs a vehicle speed signal V obtained by detecting the vehicle speed to the aimed rear wheel output power setting means 122 and the mode discrimination means 125.

The aimed rear wheel output power setting means 122 is formed from a memory such as a ROM and stores in the ROM thereof in advance aimed driving wheel output data (torque Tq) corresponding to the accelerator opening signal S112 and the vehicle speed signal V, and outputs an aimed driving wheel output signal S122 (torque instruction value-Tq) obtained by reading out the aimed driving wheel output data using the accelerator opening signal S112 and the vehicle speed signal V as an address to the engine aimed output power calculation means 123 and the motor control means 130.

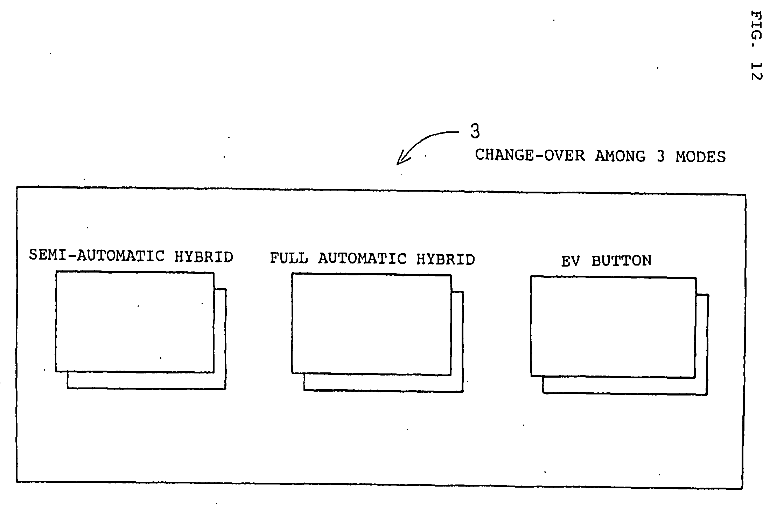

A mode changeover switch 113 (refer to FIG. 12) outputs a mode signal S113 obtained by changing over the running mode of the hybrid car 100 to the mode discrimination means 125.

The mode discrimination means 125 outputs a mode discrimination signal S125 obtained by performing mode discrimination based on the battery remaining capacity signal S111, the accelerator opening signal S112, the mode signal S113 and the vehicle speed signal V to the engine aimed output power calculation means 123.

The engine aimed output power calculation means 123 calculates the engine aimed output powers stored in advance in the ROM using the engine revolution number signal SY and the aimed driving wheel output signal S122 (Tq) as an address, and calculates an engine aimed output power for battery charging based on the battery charge amount signal S121 and the mode discrimination signal S125 and outputs an engine aimed output power signal S123 obtained by adding the two engine aimed output powers to the throttle aimed opening setting means 124.

The throttle aimed opening setting means 124 is formed from a memory such as a ROM and stores throttle aimed opening data corresponding to the engine aimed output power signal S123 in the ROM in advance, and outputs a throttle aimed opening signal S124 obtained by reading out the throttle aimed opening data using the engine aimed output power signal S123 as an address to the throttle control actuator 155.

FIG. 12 is a diagrammatic view of the mode switch 113.

The mode switch 113 changes over the running mode of the hybrid car 100 among the three modes of a semi-automatic mode, a full automatic mode and an EV (running only with the generator-motor 43) mode.

The semi-automatic mode is a mode wherein the driving output power condition of the generator-motor 43 is set higher than that of driving with the engine 61 and the car runs principally using the generator-motor 43, and is a running mode wherein, when the driving torque of the generator-motor 43 is insufficient, it is made up for by driving torque from the engine 61 and consumption of gasoline is suppressed.

Accordingly, while the batteries 21 must be externally charged periodically, the fuel consumption of the engine 61 is better.

The full automatic mode is a running mode wherein the driving output power condition of the engine 61 is set higher than that of driving with the generator-motor 43 and the car runs principally using the engine 61 and a running mode wherein, when the driving torque by the engine 61 is insufficient, it is made up for by driving torque of the generator-motor 43 and the battery capacity can be maintained.

Accordingly, the battery 21 need not be externally charged.

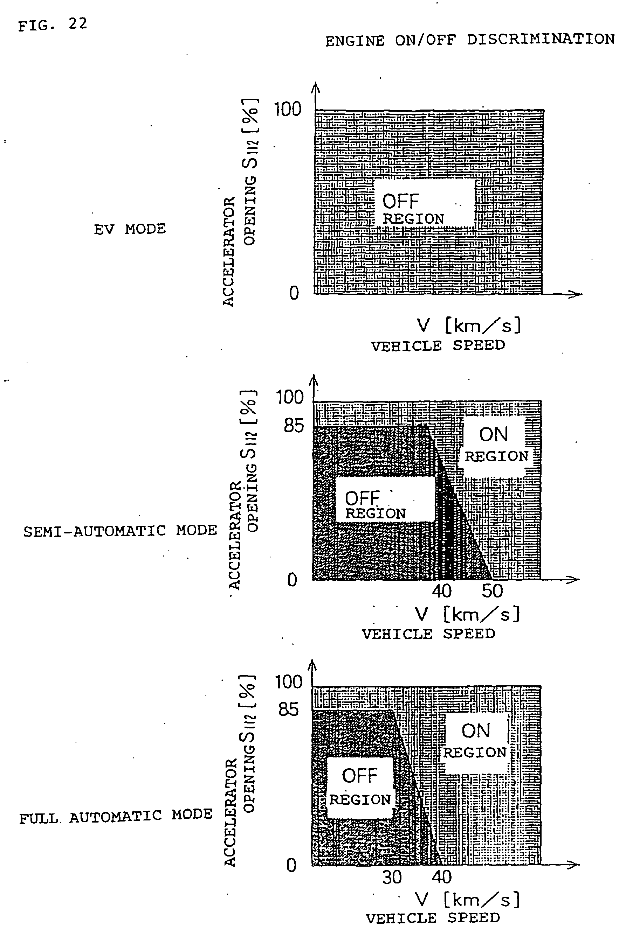

It is to be noted that an ON/OFF discrimination diagram of the engine is shown in FIG. 22 as a reference for ON/OFF operation of the engine in the three modes of the mode switch 113.

FIG. 14 is a block diagram of essential part of a form of the motor control means of the motor controlling apparatus for a hybrid car according to the present invention.

Referring to FIG. 14, the motor control means 130 includes current feedback control means 131, selection comparison means 132, oscillation means 133, selection duty limitation means 134, UVW energization pattern generation means 135, current/torque feedback control means 136, and torque feedback control means 140.

A motor revolution number sensor 116 outputs a motor revolution number signal RM obtained by detection of the revolution number of the generator-motor 43 to the current feedback control means 131, the torque feedback control means 140 and the current/torque feedback control means 136.

The torque sensor unit 88 outputs a driving wheel torque signal TS obtained by detecting the torque of the driving wheels 14 to the torque feedback control means 140.

It is to be noted that the motor revolution number sensor 116 may serve also as the motor magnetic pole sensor 115 which will be hereinafter described.

The current feedback control means 131 produces a correction aimed current IMSC and a duty limit signal S137 based on the toque instruction value Tq, the motor revolution number signal RM and the battery voltage VB, and outputs the correction aimed current IMSC to the selection comparison means 132 and outputs the duty limit signal S137 to the selection duty limitation means 134.

The torque feedback control means 140 outputs a duty/lead angle amount signal S145 and a current limit signal S146 based on the driving wheel torque signal TS, the toque instruction value Tq, the motor revolution number signal RM and the battery voltage VB, and outputs the duty/lead angle amount signal S145 to the selection duty limitation means 134 and outputs the current limit signal S146 to the selection comparison means 132.

The current/torque feedback control means 136 produces a selection signal S136 based on the torque instruction value Tq and the motor revolution number signal RM, and outputs the selection signal S136 to the selection comparison means 132 and the selection duty limitation means 134.

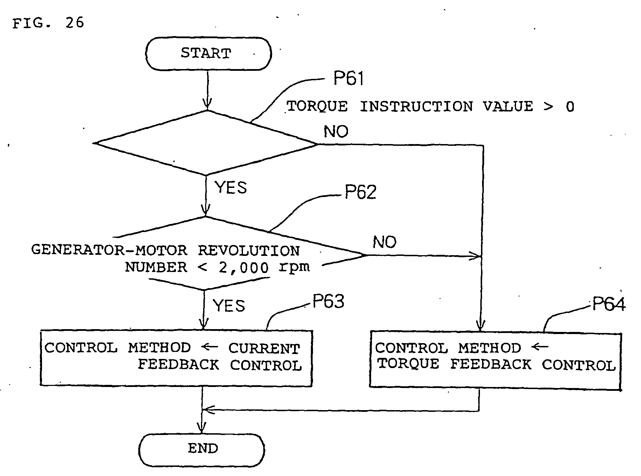

FIG. 26 shows an operation flow chart of the current/torque feedback control means.

In step P61, it is discriminated whether or not the torque instruction value Tq is higher than 0 (Tq > 0), and if the discrimination is YES, then the control advances to step P62, but if the discrimination is NO, then the control advances to step P64.

In step P62, it is discriminated whether or not the motor revolution number signal RM is lower than 2,000 rpm (RM < 2,000 rpm), and if the discrimination is YES, then the control advances to step P63, but if the discrimination is NO, then the control advances to step P64.

In step P63, the selection signal S136 for setting the controlling method for the motor control means 130 to current feedback control is outputted

In step P64, the selection signal S136 for setting the controlling method for the motor control means 130 to torque feedback control is outputted.

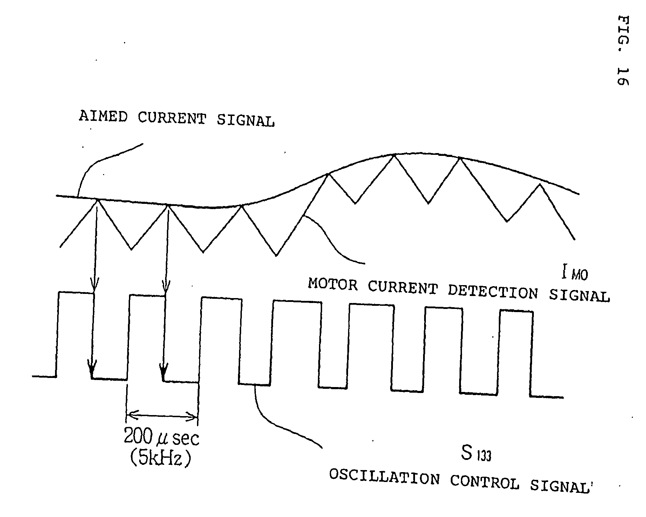

Referring back to FIG. 14, the selection comparison means 132 selects one of the correction aimed current IMSC and the current limit signal S146 based on the selection signal S136, compares the selected signal and a motor current detection signal IMO in magnitude and outputs, when the motor current detection signal IMO is equal to or higher than the selected signal (IMO ≧ IMS or S146), a reset signal S132 to the oscillation means 133 (refer to FIG. 16).

The oscillation means 133 oscillates pulses of, for example, 5 KHz and outputs an oscillation control signal S133 (refer to FIG. 16) obtained by resetting the pulse oscillation output by the reset signal S132 to zero to control the duty to the selection duty limitation means 134.

The selection duty limitation means 134 selects one of the duty signal S137 and the duty/lead angle amount limit signal S145 based on the selection signal S136 and outputs a duty limit control signal S134 obtained by limiting the duty of the oscillation control signal S133 (refer to FIG. 16) with the selected signal to the uvw energization pattern generation means 135.

The motor magnetic pole sensor 115 generates three kinds of timing signals at intervals of 120 degrees in conformity with the U phase, the V phase and the W phase of the motor coils, and outputs a magnetic pole position signal PM (S115U, S115V, S115W) obtained by detecting the positions of the magnetic poles of the generator-motor 43 as shown in FIG. 20 to the UVW energization pattern generation means 135.

The UVW energization pattern generation means 135 outputs a driving control signal S130 obtained by producing energization patterns of the U, V and W phases of the three-phase DC brushless generator-motor 43 based on the duty limit control signal S134 and the magnetic pole position signal PM to the driving means 151.

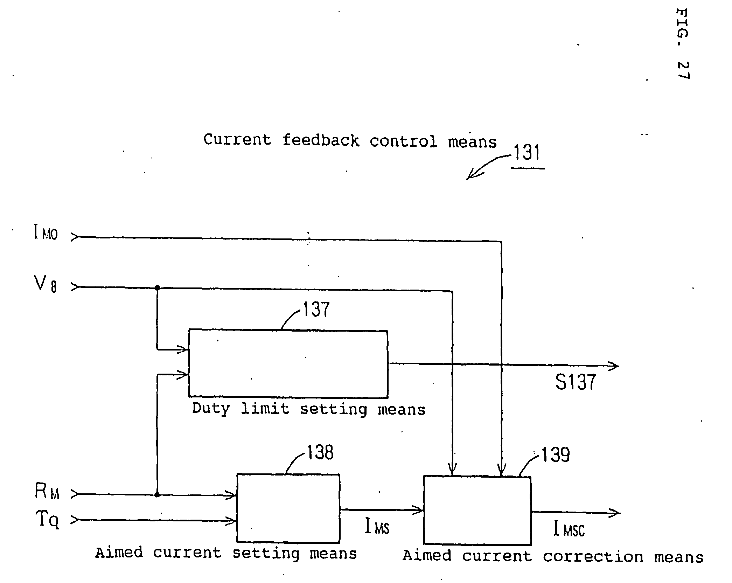

FIG. 27 is a block diagram of essential part of a form of the current feedback control means according to the present invention.

Referring to FIG. 27, the current feedback control means 131 includes duty limit setting means 137, aimed current setting means 138 and aimed current correction means 139.

The duty limit setting means 137 outputs a duty limit signal S137 for limiting the duty of the oscillation control signal S133 based on the battery voltage VB and the motor revolution number signal RM to the selection duty limitation means 134.

The aimed current setting means 138 is formed from a memory such as a ROM and stores aimed current data corresponding to the toque instruction value Tq and the motor revolution number signal RM in the ROM in advance, and outputs an aimed current signal IMS obtained by reading out the aimed current data using the toque instruction value Tq and the motor revolution number signal RM to the aimed current correction means 139.

The aimed current correction means 139 outputs a correction aimed current IMSC obtained by correction processing of the aimed current signal IMS based on the motor current detection signal IMO and the toque instruction value Tq to the selection comparison means 132.

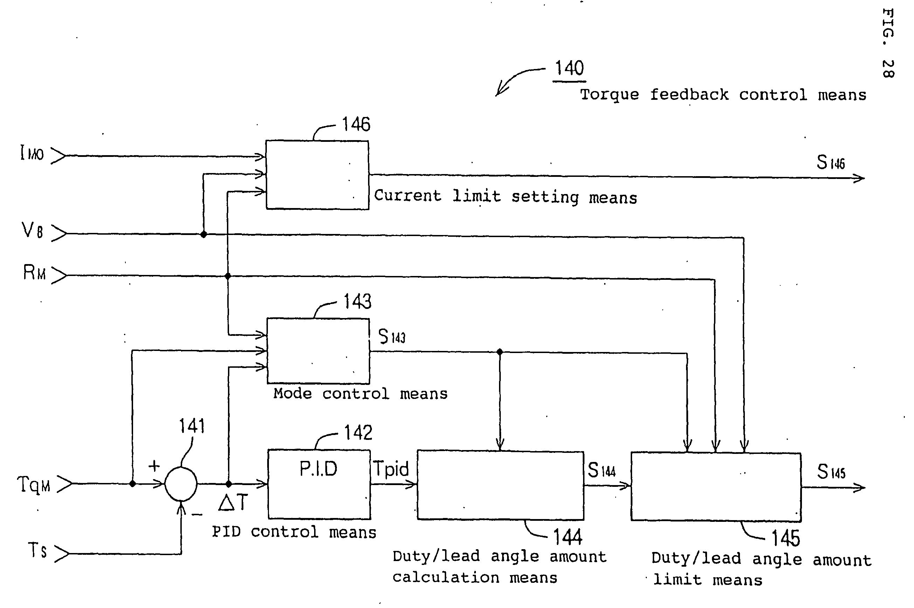

FIG. 28 is a block diagram of essential part of a form of the torque feedback control means according to the present invention.

Referring to FIG. 28, the torque feedback control means 140 includes current limit setting means 146, mode control means 143, deviation calculation means 141, PID (proportional plus integral plus derivative) control means 142, duty/lead angle amount calculation means 144, and duty/lead angle amount limit means 145.

The current limit setting means 146 is formed from a memory such as a ROM and stores in the ROM thereof current limit data corresponding to the motor current detection signal IMO, the battery voltage VB and the motor revolution number signal RM in advance, and outputs a current limit signal S146 obtained by reading out the current limit data using the motor current detection signal IMO, the battery voltage VB and the motor revolution number signal RM as an address to the selection comparison means 132.

The PID control means 142 is composed of a proportional element, an integral element, a derivative element and addition means not shown, and the proportional element performs P (proportional control) for a deviation signal ΔT; the integral element performs I (integral control) for the deviation signal ΔT; the derivative element performs D (derivative control) for the deviation signal ΔT; and the addition means outputs a PID control signal Tpid obtained by adding outputs of the elements to the duty/lead angle amount calculation means 144.

The mode control means 143 produces a mode control signal S143 for controlling the torque feedback control means 140 to a duty control mode or a lead angle amount control mode based on the motor revolution number signal RM, the torque instruction value Tq and the deviation signal ΔT, and outputs the mode control signal S143 to the duty/lead angle amount calculation means 144 and the duty/lead angle amount limit means 145.

The duty/lead angle amount calculation means 144 outputs a duty/lead angle amount signal S144 obtained by calculation of a duty or a lead angle amount based on the PID control signal Tpid and the mode control signal S143 to the duty/lead angle amount limit means 145.

The duty/lead angle amount limit means 145 outputs a duty/lead angle amount limit signal S145 obtained by limiting the duty/lead angle amount signal S144 based on the battery voltage VB, the motor revolution number signal RM and the mode control means S143 to the selection duty limitation means 134.

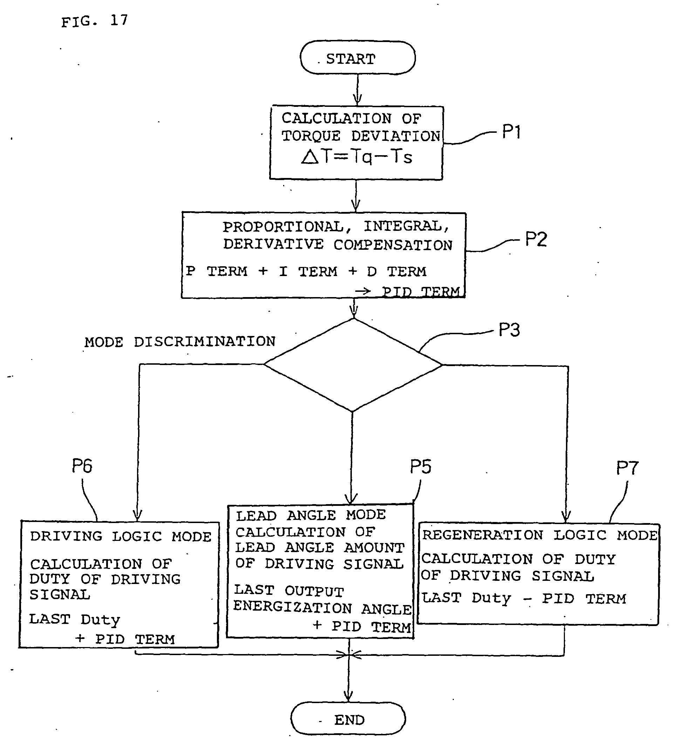

FIG. 17 is an operation flow chart of the torque feedback control means (140) and the mode control means (143).

In step P1, torque deviation calculation (ΔT = Tq - Ts) to be performed by the deviation calculation means 141 is performed to calculate a deviation signal ΔT, whereafter the control advances to step P2.

In step P2, PID compensation is performed for the deviation signal ΔT by the PID control means 142, whereafter the control advances to step P3.

In step P3, it is discriminated whether or not the toque instruction value Tq is higher than 0 (Tq > 0), and if the discrimination is YES, then the control advances to step P4, but if the discrimination is NO, then the control advances to step P7.

In step P4, it is discriminated whether or not the motor revolution number signal RM is equal to or higher than 2,000 rpm (RM ≧ 2,000 rpm) and the deviation signal ΔT is higher than a predetermined value K (ΔT > K), and if the discrimination is YES, then the control advances to step P5, but if the discrimination is NO, the control advances to step P6.

In step P5, the duty/lead angle amount calculation means 144 enters a lead angle mode, in which it performs calculation of the lead angle amount.

In step P6, the duty/lead angle amount calculation means 144 enters a driving logic mode, in which it performs calculation of the duty.

In step P7, the duty/lead angle amount calculation means 144 enters a driving logic mode, in which it performs calculation of the duty.

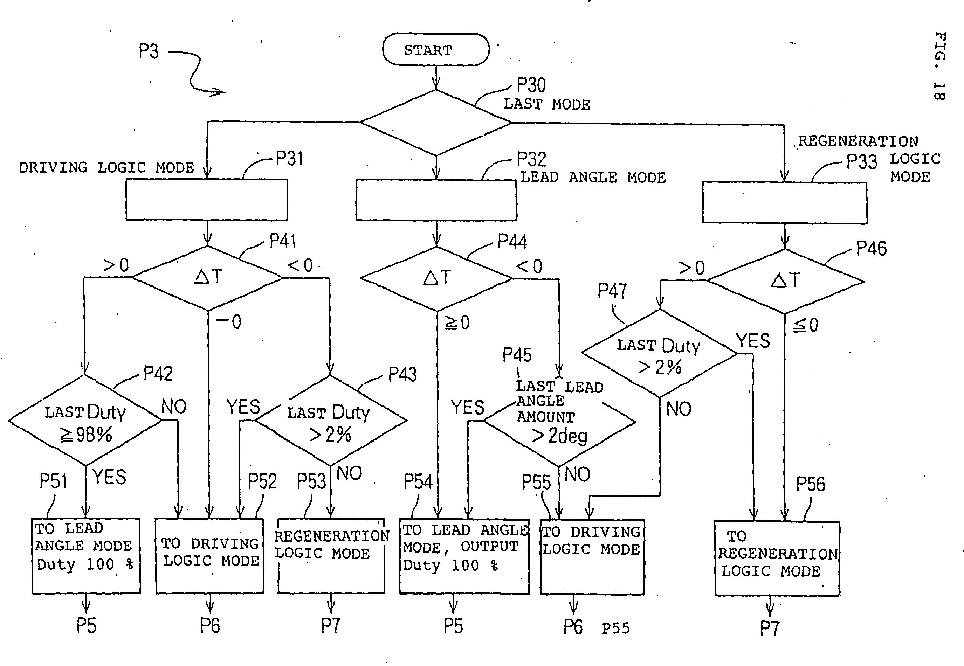

Here, the discrimination flow of FIG. 18 is described with reference to FIGS. 15, 17 and 20. (Details regarding FIG. 15 are hereinafter described.)

The lead angle mode is control wherein, as indicated by a broken line in output waveforms of FIG. 20 (the driving signal SUF is taken as an example), the signals of SU, SV and SW which make driving signals are turned on (led) rather early with respect to the signals S115U, S115V and S115W of the motor magnetic pole sensor 115.

This can change the characteristic of the motor to that of a low torque high rotation type and particularly can increase the torque upon high rotation.

This rotates the motor at a high speed by decreasing the fields of the motor coils, and is called field-weakening control.

The lead angle is proceeded while the normal energization angle of 120° is continuously increased, and after the energization angle is increased to 170° , the lead angle is further increased while the energization angle is held at 170° .

In the flow illustrated in FIG. 18, first in step P30, it is discriminated which one of the driving logic' mode, the lead angle mode and the regeneration logic mode the preceding control is.

Then, for the discriminated driving logic mode (step P31), lead angle mode (step p32) or regeneration logic mode (step P33), discrimination of whether a deviation ΔT (= Tq - Ts) between the aimed torque (Tq) and the current torque (Ts) is positive (+), zero (0) or negative (-) is executed. (Steps P41, P44 and P46)

If it is discriminated in step P41 that the deviation ΔT is positive (ΔT > 0), then since the current torque (Ts) is insufficient with respect to the aimed torque (Tq), the control advances to step P42, in which the duty (Duty) in the last energization to the motor is equal to or higher than 98 %. If the last duty is equal to or higher than 98 %, then the control advances to step P51, in which the lead angle mode is entered and the duty is set to 100 %.

Accordingly, field-weakening control is started at this point of time.

In the lead angle mode, an energization angle wherein PID (proportional, integral and derivative) terms are added to the last energization angle is determined (step P5 of FIG. 17), and an angle by which the determined energization angle exceeds the ordinary energization angle (120°) is led as indicated by a broken line in FIG. 20.

On the other hand, when the last duty in step P42 is lower than 98 %, and when it is discriminated in step P41 that the deviation ΔT is zero (ΔT = 0), the control advances to step P52, in which the driving logic mode is entered, and a duty obtained by adding PID (proportional, integral and derivative) terms to the last energization duty is outputted as a driving signal (step P6 shown in FIG. 17).

In the meantime, when it is discriminated in step P41 that the deviation ΔT is zero (ΔT = 0), the control advances to step P43, in which discrimination of whether or not the last duty exceeds 2 % is executed. If the last duty exceeds 2 %, then the control advances to step P52, in which the driving logic mode is entered, but if the last duty is equal to or lower than 2 %, then the control advances to step P53, in which the regeneration logic mode is entered.

If the deviation ΔT is negative (ΔT < 0), then since also the PID terms become positive → 0 → negative, although the PID terms are added (step P6 illustrated in FIG. 17) in the driving logic mode (step P52), the energization duty continues to decrease within the period within which the deviation ΔT is in the negative (ΔT < 0).

As the duty decreases, also the current torque (Ts) decreases, and if the aimed torque (Tq) is positive, then when the current torque (Ts) and the aimed torque (Tq) become equal to each other (Tq = Ts), the deviation becomes ΔT = 0, and also the PID terms become 0. The duty becomes stable with the value at the present point of time, and fixed torque operation is entered.

If the aimed torque (Tq) is negative (Tq < 0), that is, in such a case that the vehicle is decelerating, since the deviation ΔT remains negative by whichever amount the energization duty decreases, at a point of time when the energization becomes equal to or lower than 2 %, the mode of the motor changes from the driving logic mode to the regeneration logic mode (step S53), and the motor enters a regeneration braking condition to generate a deceleration feeling. At this point of time, a regeneration mode is started.

The regeneration logic mode is a mode wherein, as illustrated in FIG. 20, the coils of the U phase, the v phase and the W phase and the batteries are put into an on-state therebetween by the FETs Q1, Q3 and Q5 so that the coils may have connection timings for each 120 degrees.

In the regeneration logic mode, the PID terms are subtracted from the last duty to calculate a motor duty (step P7 of FIG. 17), and while the deviation ΔT is equal to or lower than 0 (ΔT ≦ 0) (from step 46 to step P56), also the PID terms are equal to or lower than 0, and the energization duty of the motor is substantially increased from a minimum value equal to or lower than 2 % and regeneration braking increases.

Consequently, since the value of the current torque (Ts) becomes negative (Ts < 0) by the regeneration braking; both of the aimed torque (Tq) and the torque (Ts) become negative values, and the deviation ΔT gradually approaches 0 from the negative value.

Thereafter, at the point of time when the deviation ΔT becomes positive (ΔT > 0) (step P46), the regeneration logic mode is continued before the last duty becomes lower than 2 % (step P56).

This is because, since also the PID terms become positive as the deviation ΔT becomes positive, the duty decreases.

Then, at the point of time when the duty becomes lower than 2 %, the driving logic mode is entered (the control advances from step P55 to step 6 of FIG. 17).

Accordingly, the regeneration logic mode comes to an end at this point of time.

If the deviation ΔT is positive, then since also the PID terms are positive, the duty is now increased by the calculation in step P6 illustrated in FIG. 17.

Then, in step P44, if the deviation ΔT is equal to or higher than 0 (ΔT ≧ 0), since the last mode is the lead angle mode, an increase of the torque is demanded continuously, and the lead angle mode is continued through step P54 (step P5 of FIG. 17).

On the other hand, if the deviation ΔT is negative (ΔT < 0) in step P44, then the lead angle mode is continued until the last lead angle amount becomes equal to or smaller than 2 degrees (≦ 2 deg) (from step S45 to step P5 of FIG. 17).

In this instance, in step P5, the PID terms are added to the last energization angle. However, since the deviation ΔT is negative (ΔT < 0), the PID terms themselves change to negative values, and consequently, at a point of time when the lead angle amount becomes equal to or smaller than 2 degrees, the driving logic mode is entered (step P6 of FIG. 17).

Accordingly, the field-weakening control is ended at this point of time.

By switchably controlling the mode among the driving logic mode, the lead angle mode and the regeneration logic mode in response to the value of the deviation ΔT to effect control, torque feedback control confirming to a desired aimed torque (Tq) can be performed.

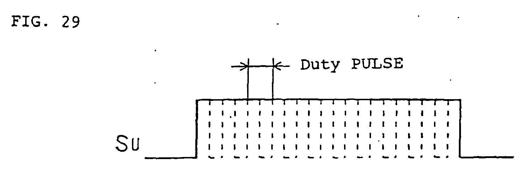

It is to be noted that, while the driving signals (SU, SV and SW) of FIG. 20 are on (in the H level state) in all of the modes, a delicate duty pulse is outputted as shown in FIG. 29 so that the effective voltage of the motor is controlled.

FIG. 15 shows a circuit of the driving means.

Referring to FIG. 15, the driving means 151 includes N-channel FETs (Q1 to Q6), flywheel diodes (D1 to D6), and a capacitor C1.

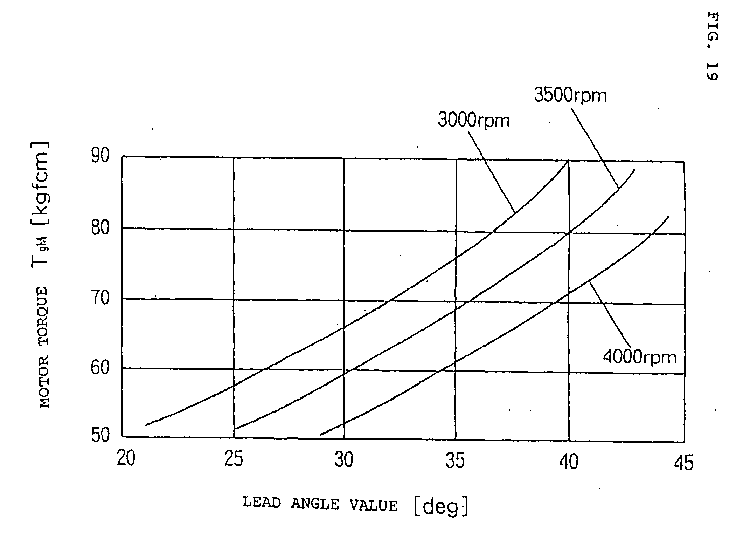

The driving means 151 receives an on/off signal_of the driving control signal S130 at the gates (G2, G4 and G6) and a PWM signal of the driving control signal S130 at the gates (G1, G3 and G5), and outputs such driving signals (SU, SV and SW, or SUF, SVF and SWF, or else SUB, SVB and SWB) as shown in FIG. 19 to the three-phase DC brushless generator-motor 43 to control driving of the generator-motor 43.

In this manner, the hybrid car 100 includes the driving wheels 14, the generator-motor 43, the transmission 48, the engine 61, the various sensors 110, the battery 21, the hybrid car motor control apparatus 150, the driving means 151, the driving/regeneration changeover means 152 and the throttle control actuator 155, discriminates a full automatic mode wherein the engine is driven only within a range within which the fuel consumption efficiency is high and generation energy obtained by driving the generator-motor with the engine output power is used to charge the batteries while the car is running and a semi-automatic mode wherein the generator-motor is driven with supply power from the batteries to cause the car to run and, only when the driving force of the generator-motor is insufficient, the engine driving force is assisted, by a switching operation of the mode switch to control driving of the engine and the generator-motor so that running principally with the engine or running principally with the EV (generator-motor) can be performed, performs, when rotation of the generator-motor is low, current feedback control by which the motor current can be controlled with a high degree of accuracy whereas it performs toque feedback control in a high vehicle speed-high torque region, and controls the allowable maximum motor current value to protect the generator-motor from excessive current and can raise the fuel consumption efficiency of the engine.

Consequently, also it is possible to reduce the current sensors 161 to one, and reduction in cost is possible.

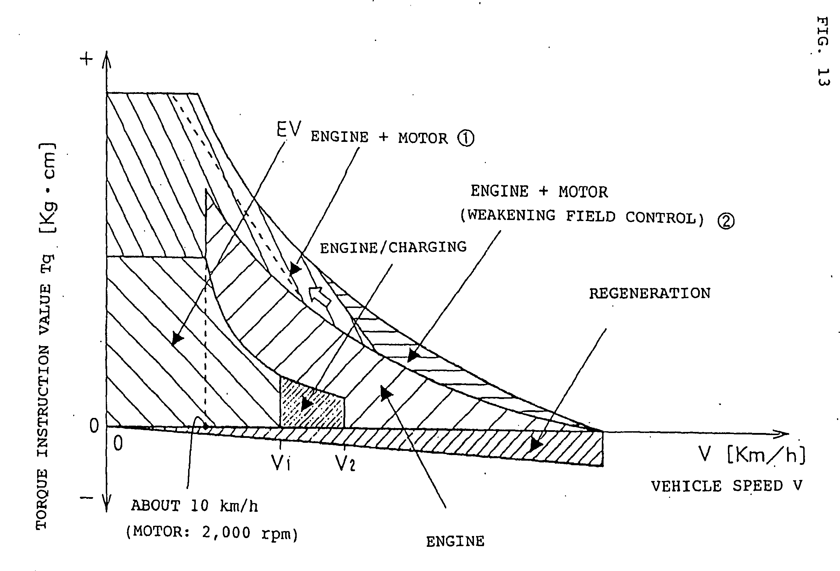

FIG. 13 is a diagram illustrating the driving regions of the engine and the motor of the hybrid car according to the present invention.

The hybrid car 100 basically allows driving with the engine 61 over the entire driving region.

Referring to FIG. 13, the axis of abscissa is the vehicle speed V (km/h) and the axis of ordinate is the torque instruction value Tq (kg·cm), and the driving region is divided into an engine region in which the engine 61 drives the car, an EV region in which the car is driven only with the generator-motor 43, an engine charging region in which the engine 61 is operated in a high efficiency region to drive the generator-motor 43 and generation energy generated by the generator-motor 43 is used to charge the batteries 21 while the car is running, a charging region and a regeneration region in which, when the car is decelerated, regeneration braking is applied by the generator-motor 43 to cause the generator-motor 43 to generate power to charge the batteries 21, an engine/motor region ① in which the car is driven with the engine 61 and the generator-motor 43, and another engine/motor region ② in which the car is driven with the engine 61 and the generator-motor 43 which is controlled by field-weakening control.

It is to be noted that the boundary between the engine/motor region ① and the engine/motor region ② is corrected such that, as the voltage of the batteries 21 drops, the boundary between the engine/motor regions ① and ② moves as indicated by an arrow mark to a region of a broken line which is wider.

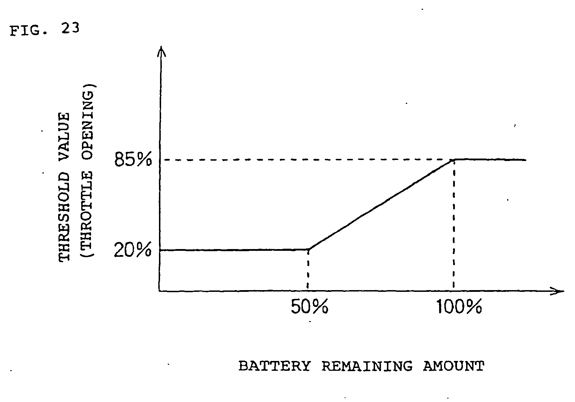

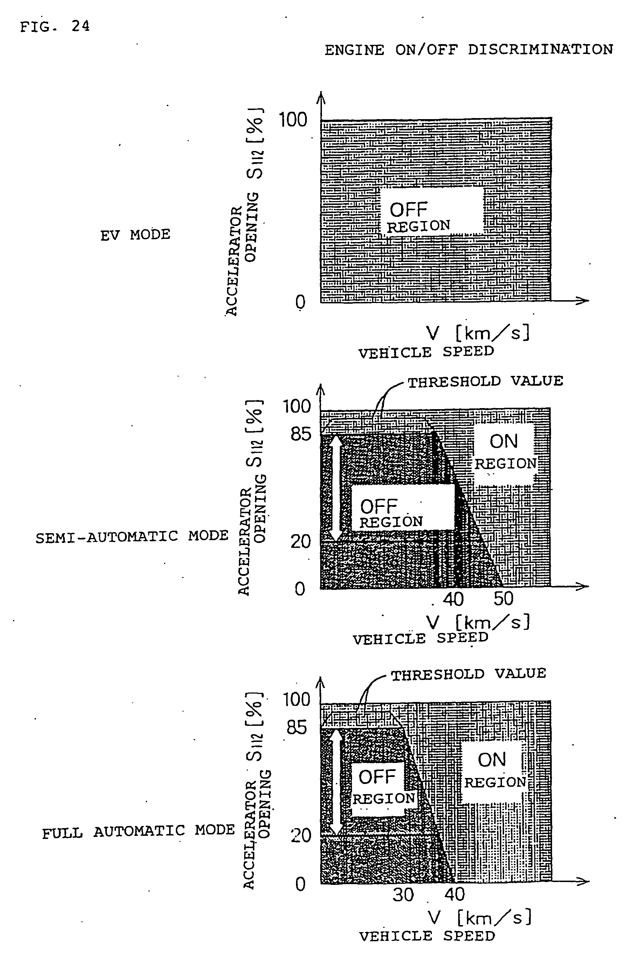

It is to be noted that such a construction that the relationship between the battery remaining amount and the threshold value for the throttle opening (accelerator opening) is determined in such a manner as illustrated in FIG. 23 and ON/OFF discrimination of the engine is performed as shown in FIG. 24 may be employed. The relationship may be stored as a data table in a ROM in the control apparatus so that it may be referred to at any time.

Where the battery remaining amount is, for example, 0 to 50 %, the threshold value is set, for example, to 20 %.

Where the battery remaining amount is, for example, higher than 100 %, the threshold value is set, for example, to 85 %. Where the battery remaining amount is, for example, 50 to 100 %, the threshold value exhibits a gradual increase.

In particular, in the semi-automatic mode and the full automatic mode of FIG. 24, the threshold value for the accelerator opening at which operation of the engine is started is made variable within 20 to 85 % based on the battery remaining amount.

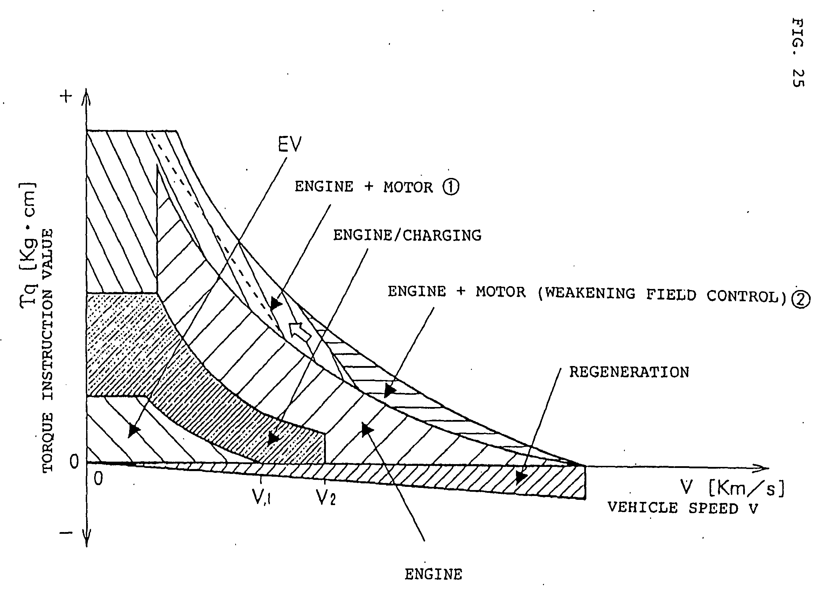

Accordingly, as the battery remaining amount becomes small, engine driving is performed at an early stage from a condition wherein the accelerator opening is low. Consequently, as shown in FIG. 25, the EV region becomes smaller comparing with that of the case of FIG. 13, and the engine/charging region can be widened as much. In this instance, in the semi-automatic mode, V1 = 50 km/h, and in the full automatic mode, V1 = 40 km/h.

Consequently, when the battery remaining amount is small, engine/charging can be performed frequently, and consumption of (the power of) the batteries can be prevented effectively.

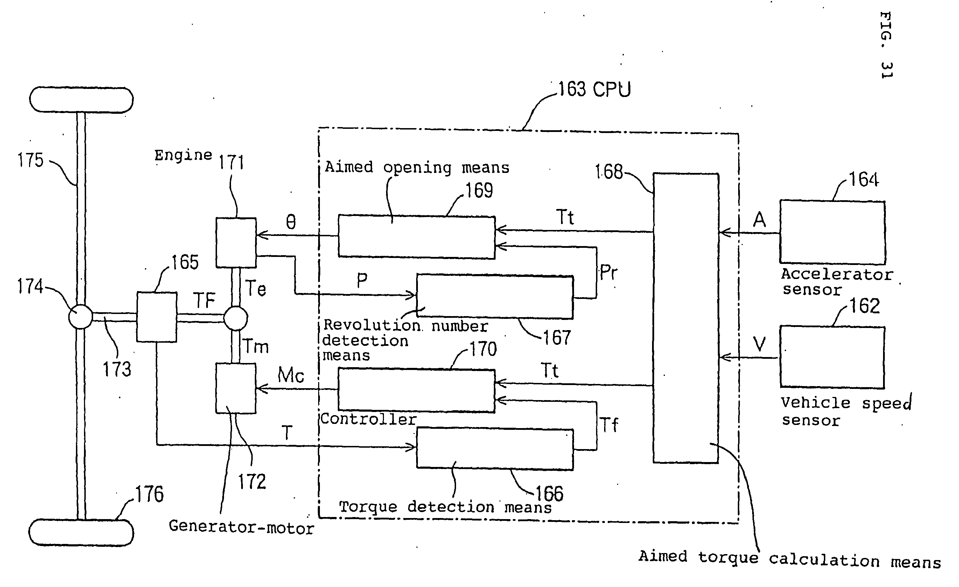

FIG. 31 is a block diagram of essential part of a controlling apparatus for a hybrid car.

Referring to FIG. 31, the controlling apparatus for a hybrid car includes an accelerator sensor 164, a vehicle speed sensor 162, a torque sensor 165, an engine 171, a generator-motor 172, a common output power shaft (propeller shaft) 173, a differential apparatus 174, a drive shaft 175, driving wheels 176 and a CPU 163.

Referring to FIG. 31, the CPU 163 is composed of torque detection means 166, aimed torque calculation means 168, aimed opening means 169, revolution number detection means 167 and a controller 170.

The accelerator sensor 164 is formed from an operational transformer, a potentiometer or the like and is connected from an accelerator pedal by a wire, and outputs a signal A corresponding to an amount by which the accelerator pedal is operated by a driver and supplies the signal A to the CPU 163.

The vehicle speed sensor 162 has such a construction that a magnet is mounted on the wheel shaft (drive shaft) with poles thereof directed in radial directions and coils are arranged in directions opposing to the magnetic poles or the like, and calculates based on a wheel speed from a variation amount of magnetic poles, outputs a signal V corresponding to a moving speed of the vehicle and supplies the signal V to the CPU 163.

The torque sensor 165 may include electromagnetic coils, photoelectric elements or the like opposing to protrusions of two gear-like disks spaced from each other so that a displacement in phase between the two gear-like disks may be detected as an action of a tortion bar or may be provided at a joining portion at which the engine 171 and the generator-motor 172 are mechanically connected to each other or on the common output power shaft (propeller shaft) at a downstream portion from the joining portion to the differential apparatus such that it supplies a detected signal T (Ts) to the CPU 163 and calculate a torque amount from the displacement in phase.

Further, the torque sensor 165 may be provided at a location from the common output power shaft (propeller shaft) on the downstream from the joining portion to the drive shaft (drive shaft).

The engine 171 and the generator-motor 172 are set such that, while, for example, a gasoline engine, a diesel engine or the like of an internal combustion engine is used as a first power source and a motor or the like is used as a second power source, the first power source and the second power source may be formed from elements having different output powers or a plurality of such first power sources and/or second power sources may be employed.

The engine 171 outputs a driving output torque Te, and the generator-motor 172 outputs a driving output torque Tm.

Meanwhile, at the joining portion or on the common output power shaft at the downstream portion from the joining portion to the differential apparatus, the driving output torque Te of the engine 171 and the driving output torque Tm of the generator-motor 172 are added to obtain a driving output torque TF.

The common output power shaft (propeller shaft) 173 transmits, at a location from the joining portion at which the engine 171 and the generator-motor 172 are mechanically connected to each other to the differential apparatus 174, driving forces of the engine 171 and the generator-motor 172 to the driving wheels 176 through the differential apparatus 174 and further through the drive shaft 175.

The differential apparatus 174 distributes the driving forces of the engine 171 and the generator-motor 172 in both the opposite left and right directions by 90 degrees for the left and the right through the propeller shaft 173 to transmit the driving forces to the drive shaft 175 to transmit power to the driving wheels 176 and also has an action to cancel a displacement between amounts of rotation of the left and right driving wheels 176 at a corner portion or the like.

The drive shaft 175 receives the driving forces of the engine 171 and the generator-motor 172 through the differential apparatus 174 on the left and right and transmits the power to the driving wheels 176.

The driving wheels 176 receive and are rotated by the driving forces of the engine 171 and the generator-motor 172 through the drive shaft 175 to move the vehicle.

The CPU 163 is basically formed from a microprocessor and is composed of torque detection means 166, the aimed torque calculation means 168, the aimed opening means 169, the revolution number detection means 167 and the controller 170, and is supplied with a signal T from the torque sensor 165, a signal A from the accelerator sensor 164, a signal V from the vehicle speed sensor 162, a rotation signal P from the engine 171 and so forth.

The CPU 163 supplies a signal Tt obtained by calculation of an aimed torque from the signal A from the accelerator sensor 164 and the signal V from the vehicle speed sensor 162 by the aimed torque calculation means 168 and a signal Pr obtained by detecting a number of revolutions by the rotation signal P from the engine 171 by the revolution number detection means 167 to the aimed opening means 169, calculates an aimed opening of a throttle by the aimed opening means 169 and supplies a signal θ to a throttle actuator for the engine 171.

Further, the CPU 163 supplies the signal Tt obtained by calculation of an aimed torque from the signal A of the accelerator sensor 164 and the signal V from the vehicle speed sensor 162 by the aimed torque calculation means 168 and a signal Tf based on an absolute value of a torque amount obtained by detecting the signal T from the torque sensor 165 by the torque detection means 166 to the controller 170, calculates a control amount for the generator-motor 172 by the controller 170 and controls the generator-motor 172 with a control signal Mc.

Meanwhile, the CPU 163 drives the engine 171 normally in a fixed condition and drives, when a variation of the driving force caused by an actual running condition of the vehicle, a use condition of the engine 171 upon starting or the like, a unique characteristic of the individual engine 171 and so forth is detected by the torque sensor 165 provided on the common output power shaft (propeller shaft) 173 and this reveals that the output power amount only of the engine 171 is insufficient for an accelerator signal amount A requested by a driver, the generator-motor 172 so that the shortage may be made up for while the torque amount T of the common output power shaft can always be fed back to obtain stabilized power having a linearity in running driving torque.

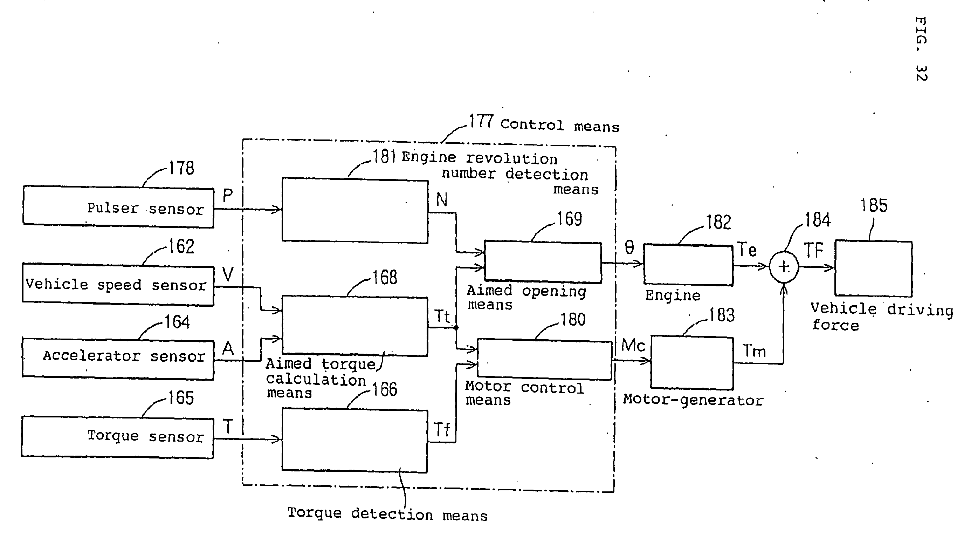

FIG. 32 is a block diagram of essential part of a hybrid car controlling apparatus.

FIG. 32 is formed from an engine 182, a motor-generator 183, an accelerator sensor 164, a vehicle speed sensor 162, a torque sensor 165, a pulser sensor 178 and control means 177, and a torque amount T by the torque sensor 165 provided at a joining portion of output powers of the engine 182 and the motor-generator 183 or on the downstream from the joining portion is measured with respect to a driving output power Te of the engine 182 and, when the torque amount T from the accelerator sensor 164 is short from a request torque amount, a driving output power Tm from the motor-generator 183 is added by an addition section 184 to obtain a vehicle driving force 185.

For the pulser sensor 178, a pulser sensor of the electromagnetic pickup type which makes use of a variation in reluctance is used, and the pulser sensor 178 is composed of a reluctance element provided on a rotor connected to a crankshaft and a pulser coil disposed in a non-contacting opposing relationship to the reluctance element and supplies a pulser signal P, which is generated by the pulser coil when the reluctance element moves toward the pulser coil and moves away from the pulser coil, to the control means 177.

The vehicle speed sensor 162 has such a construction that a magnet is mounted on a wheel shaft (drive shaft) with magnetic poles thereof directed in radial directions and coils are arranged in directions opposing to the magnetic poles or the like, and calculates based on a wheel speed from a variation amount of magnetic fluxes, outputs a signal V corresponding to a moving speed of the vehicle and supplies the signal V to the control means 177.

The accelerator sensor 164 is formed from an operational transformer, a potentiometer or the like and is connected from an accelerator pedal by a wire, and outputs a signal A corresponding to an amount by which the accelerator pedal is operated by a driver and supplies the signal A to the control means 177.

The torque sensor 165 may include electromagnetic coils, photoelectric elements or the like opposing to protrusions of two gear-like disks spaced from each other so that a displacement in phase between the two gear-like disks may be detected as an action of a tortion bar or may be provided at a joining portion at which the engine 182 and the generator-motor 183 are mechanically connected to each other or on the common output power shaft (propeller shaft) at a downstream portion from the joining portion to the differential apparatus such that it supplies a detected signal T to the control means 177.

Otherwise, the torque sensor 165 may be provided at a location from the common output power shaft (propeller shaft) on the downstream from the joining portion to the drive shaft.

The engine 182 is formed from a gasoline engine, a diesel engine or the like, and a signal θ of an aimed opening is supplied from the control means 177 to a throttle actuator based on a signal A detected by the accelerator sensor 164 and corresponding to the amount of operation of the accelerator pedal of a driver and a pulser signal P detected by the pulser sensor 178 and the amount of fuel is controlled by the throttle actuator to adjust the number of revolutions of the engine to adjust the engine torque.

The motor-generator 183 includes a motor which generates rotational torque to rotate the drive shaft by converting, by a motor control signal Mc from the control means 177 based on the signal A detected by the accelerator sensor 164, the signal V detected by the vehicle speed sensor 162 and the torque signal T detected by the torque sensor 165, driving current from a battery not shown by means of a switching element or the like to vary the pulse width of the current, and a generator for generating regeneration current by rotation from the common output power shaft 173 by the engine 182 or torque of inertia.

The control means 177 is basically formed from a microprocessor and is composed of torque detection means 166, aimed torque calculation means 168, aimed opening means 169, engine revolution number detection means 181 and motor control means 180, and receives a signal T from the torque sensor 165, a signal A from the accelerator sensor 164, a signal V from the vehicle speed sensor 162, a signal P from the pulser sensor 178 and so forth, supplies a signal θ of an aimed opening to the engine 182 and outputs a control signal Mc for the motor to the motor-generator 183.

Meanwhile, the control means 177 performs charging of the battery not shown with power generated by the generator section of the motor-generator 183 using regeneration torque of the engine 182.

However, if, upon battery charging, a connection is established directly from the generator to the battery to form a closed circuit between the generator and the battery, then a braking force is applied suddenly against the regeneration torque of the engine 182, and therefore, an element equivalent to a switching element for controlling the motor section is connected in the opposite direction or the motor and the generator are connected to form an H-bridge so as to apply common control to them and the pulse width of driving pulses of the switching element is controlled with a PWM signal to effect such control as to increase the charge current to gradually increase.

The engine revolution number detection means 181 is formed from a counter, an arithmetic circuit and so forth, and calculates, from the pulser signal P from the pulser sensor 178, a period of the pulser signal P (a period from a pulse generated when a reluctance element approaches a pulse coil to another pulse generated when a next reluctance element approaches the pulse coil) and determines a speed of revolution of the engine by operation from the period.

Here, while retrieval of a table, a map or the like of a BTDC with respect to an injection amount of fuel, an ignition timing or the like for driving of the engine is based on the number of revolutions of the engine, since they are functions of the time, the engine revolution number detection means 181 performs calculation not only of the number of revolutions of the engine but also of the speed of revolution.

Further, the engine revolution number detection means 181 supplies a signal N of the engine revolution number to the aimed opening means 169.

The torque detection means 166 is formed from a comparator, an arithmetic unit, a transmitter and so forth, and receives a signal T of a torque amount of the joining portion, at which the engine 182 and the motor-generator 183 are mechanically connected to each other and the torque sensor 165 is provided, or a downstream portion from the joining portion, calculates a torque amount from a displacement in phase of the signal T and supplies a signal Tf based on an absolute value of the torque amount to the motor control means 180.

However, the positive/negative value of the signal Tf indicates the direction of driving, and, for example, the positive value represents counterclockwise rotation and corresponds to forward running of the vehicle while the negative value indicates clockwise rotation and corresponds to backward running of the vehicle.

The aimed torque calculation means 168 performs table retrieval based on the signal A from the accelerator sensor 164 and the signal V from the vehicle speed sensor 162 to calculate an aimed torque to be aimed and supplies an aimed torque amount signal Tt of a result of the calculation to the aimed opening means 169 and the motor control means 180.

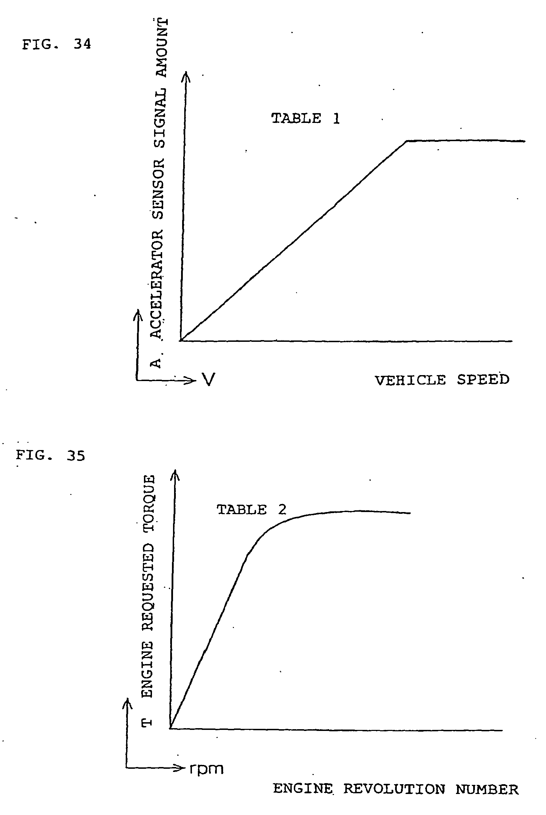

Meanwhile, the aimed torque calculation means 168 includes a memory such as a ROM, in which data of the aimed torque amount Tt which is a torque amount to be aimed corresponding to a signal A amount (or also an operation angle of the accelerator pedal or the like is equivalent) from the accelerator sensor 164 and the signal V from the vehicle speed sensor 162 such as, for example, a table 1 of FIG. 34 set based on an experiment, theoretical calculation or the like are stored in advance, and selects and outputs an aimed torque amount Tt corresponding to inputs of the accelerator signal A after digital conversion and the vehicle speed signal V.

Furthermore, the aimed torque calculation means 168 performs table retrieval based on the signal A from the accelerator sensor 164 and the signal V from the vehicle speed sensor 162, calculates an aimed torque to be aimed and supplies an aimed torque amount signal Tt of a result of the calculation to the aimed opening means 169 and the motor control means 180.

The aimed opening means 169 performs table retrieval based on, since the aimed torque value Tt obtained by the aimed torque calculation means 168 is equal to a torque value requested by the engine, the signal Tt and the signal N from the engine revolution number detection means 181, calculates an opening of the throttle to be aimed, and supplies an aimed opening signal θ of the throttle which is a result of the calculation to the throttle actuator for the engine 182.

Meanwhile, the aimed opening means 169 includes a memory such as a ROM, in which data of the aimed opening amount which is an opening amount of the throttle corresponding to the signal N from the engine revolution number detection means 181 and the signal Tt from the aimed torque calculation means 168 such as, for example, a table 2 of FIG. 35 set based on an experiment, theoretical calculation or the like are stored in advance, and selects and outputs an aimed opening amount signal θ corresponding to inputs of the engine revolution number signal N after digital conversion and the engine requested torque signal Tt.

Furthermore, the aimed opening means 169 includes, though not shown, a ROM or the like in which, for example, also a fuel injection amount and so forth corresponding to an intake pipe negative pressure (PB), a sensor amount such as a water temperature sensor or the like and a number of revolutions of the engine are stored as a map, and also can cause the engine to control the optimum opening amount of the throttle by retrieval of the ROM.

In this manner, the aimed opening means 169 supplies the aimed opening signal θ of the throttle to the engine 182 based on the aimed torque signal Tt from the aimed torque calculation means 168, which is based on the signal A from the accelerator sensor 164 and the signal V from the vehicle speed sensor 162, and the signal P from the pulser sensor 178.

The motor control means 180 is formed from a transmission circuit, a delay circuit and so forth, and performs table retrieval and calculation based on the aimed torque signal Tt from the aimed torque calculation means 168 and the signal Tf based on an absolute value of the torque amount T from the torque detection means 166 and supplies a control amount signal Mc for the motor to the motor section of the motor-generator 183.

The motor control means 180 supplies a PWM signal to a switching element such as an FET, a GTO, an IGBT or the like to vary the pulse width of current from the battery with the PWM signal and supplies the PWM signal current of the varied pulse width to the motor section of the motor-generator 183.

Meanwhile, the motor control means 180 detects an output torque amount Te of the driving torque of the engine 182 (actually a driving torque amount TF at a portion on the downstream of the joining portion), which is driven based on the aimed opening signal θ corresponding to the signal A from the accelerator sensor 164, by means of the torque sensor 165, and does not supply, when the output torque amount Te (TF) is higher than the aimed torque signal Tt for the engine, a control amount signal Mc to the motor.

Further, if the control amount signal Mc is being supplied to the motor at present, then the motor control means 180 decreases the control amount of the signal Mc.

Furthermore, the motor control means 180 detects the output torque amount Te of the driving torque of the engine 182 (actually the driving torque amount TF at the portion on the downstream of the joining portion), which is driven based on the aimed opening signal θ corresponding to the signal A from the accelerator sensor 164, by means of the torque sensor 165, and supplies, when the output torque amount Te (TF) is lower than the aimed torque signal Tt for the engine, a control amount signal Mc to the motor.

Further, if the control amount signal Mc is being supplied to the motor at present, then the motor control means 180 further increases the control amount of the signal Mc.

On the other hand, the motor control means 180 detects the output torque amount Te of the driving torque of the engine 182 (actually the driving torque amount TF at the portion on the downstream of the joining portion), which is driven based on the aimed opening signal θ corresponding to the signal A from the accelerator sensor 164, by means of the torque sensor 165, and keeps, when the output torque amount Te (TF) is equal to the aimed torque signal Tt for the engine, the signal amount without varying the supply of the control amount signal Mc to the motor

Further, the motor control means 180 includes a memory such as a ROM which is set based on an experiment, theoretical calculation or the like, and performs starting driving only with the motor-generator 183 when the vehicle speed signal V from the vehicle speed sensor 162 increases from 0 (for example, when driving torque of the engine 182 is outputted momentarily such as upon starting of the vehicle or upon starting from a condition wherein generation is performed by the generator using regeneration torque of the engine 182 while the vehicle is in a stopping condition, braking force actually acts against the driving torque of the engine 182.)

Meanwhile, the motor control means 180 controls, in such an instance wherein generation is performed by the generator section of the motor-generator 183 using regeneration torque of the engine 182 in a condition wherein the vehicle is on an inclined road, the control signal amount Mc to the motor upon changing over of regeneration involved in generation to keep the linearity of the running driving torque.

For example, when the vehicle is running at such a location as a downhill road, since braking is applied against a fixed engine torque if generation is performed, while the vehicle speed signal V is read, changing over from the generator of the motor-generator 183 to the battery is controlled by controlling the ON/OFF times of a switching element so that current from the generator may not be connected at a time to the battery to form a closed circuit.

On the other, when the vehicle is running at such a location as an uphill road, if driving torque is added to a fixed engine torque with the motor, then sudden acceleration is applied, and therefore, while the vehicle speed signal V is read, changing over to the motor is controlled by controlling the ON/OFF times of the switching element so that the motor may not be driven at a time.

The addition section 184 adds, at the joining portion at which the engine 182 and the motor-generator 183 are mechanically connected to each other, a driving output power Tm of the motor-generator 183 to a driving output power Te of the engine 182 to obtained a thus added driving output power TF.

The vehicle driving force 185 obtains a driving force obtained by the mechanical connection of the engine 182 and the motor-generator 183 to each other, and obtains a driving force originating only from the engine 182, a driving force originating only from the motor of the motor-generator 183 and an added driving force originating from the two of the engine 182 and the motor--generator 183 to drive the wheels not shown to cause the vehicle to run.

In this manner, with the controlling apparatus for a hybrid car, since the engine calculates, based on the aimed torque signal and the engine revolution number signal, a throttle opening, based on which the fuel injection amount is controlled, while the generator-motor includes a generator for generating regeneration current by rotation from the drive shaft, and motor control means for controlling a motor based on the aimed torque signal and the actual torque signal, and driving of the generator-motor is controlled based on a driving control signal from the motor controlling means, a linearity of the running driving torque which has a short response time and is quick can be obtained.

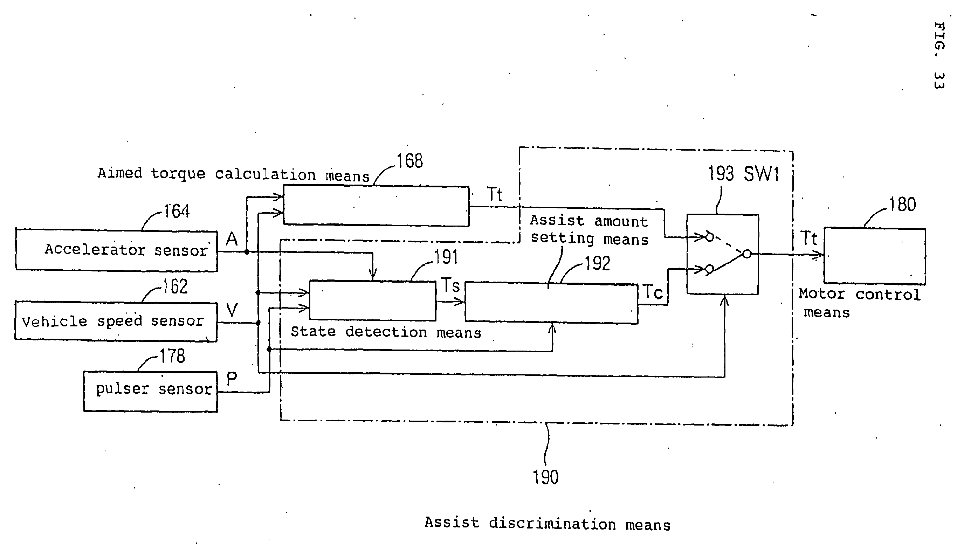

FIG. 33 is a block diagram of essential part of assist discrimination means of a hybrid car controlling apparatus.

FIG. 33 is formed from a pulser sensor 178, a vehicle speed sensor 162, an accelerator sensor 164, aimed torque calculation means 168, motor control means 180 and assist discrimination means 190, and the object is to control an assist amount when a driving output power from the motor-generator 183 is added to the engine 182 in accordance with a use condition, an individual unique characteristic or the like of the engine 182 upon starting and supply the assist amount to the motor control means 180 so that a continuous and smooth running driving force which is fast in response time and quick can be obtained.

The assist discrimination means 190 is composed of state detection means 191, assist amount setting means 192 and a switch 193.

The assist discrimination means 190 includes a memory such as a ROM, which is set based on an experiment, theoretical calculation or the like, and supplies a control signal Tt corresponding to a use condition, an individual unique characteristic and so forth of the engine 182 upon starting or the like based on an accelerator signal A from the accelerator sensor 164, a vehicle speed signal V from the vehicle speed sensor 162 and a pulser signal P from the pulser sensor 178 to the motor control means 180.

The state detection means 191 includes a memory such as a ROM, which is set based on an experiment, theoretical calculation or the like, and supplies a signal Ts corresponding to a state based on the accelerator signal A from the accelerator sensor 164, the vehicle speed signal V from the vehicle speed sensor 162 and the pulser signal P from the pulser sensor 178 to the assist amount setting means 192.

The state detection means 191 detects whether or not the vehicle speed signal V is 0, and detects the number of revolutions of the engine in a condition wherein the vehicle speed is 0 and detects a state whether the number of revolutions is lower or higher than a preset value which is based on the experiment, theoretical calculation or the like.

The state detection means 191 detects, based on a detection value, a stopping condition of the vehicle or a use condition upon starting or the like, an individual unique characteristic and so forth.

For example, if the vehicle speed is 0 and the number of revolutions of the engine is equal to the preset value, then the vehicle is in an ordinary stopping condition such as when the vehicle is waiting for a change of a traffic signal.

On the other hand, when the vehicle speed is 0 and the number of revolutions of the engine is higher than the preset value, the state detection means 191 is in a condition when the engine is started (starting from a condition wherein the engine is cold).

Or, an air conditioner or the like is being driven. Those conditions are stored in the ROM so that the driving torque may not be influenced.

Furthermore, when the vehicle speed is 0 and the number of revolutions of the engine is lower than the preset value, the state detection means 191 detects a state wherein generation is being performed by the generator using regeneration torque.

Further, when the fuel or the battery is short, the state detection means 191 issues an alarm to inform a driver of the fact.

Furthermore, the state detection means 191 performs such state detection and discrimination as described above, and detects, when it is supplied with the accelerator signal A in such conditions, starting of the vehicle (when the vehicle speed signal v increases from 0) and supplies the signal Ts to the assist amount setting means 192.

The assist amount setting means 192 includes a memory such as a ROM, which is set based on an experiment, theoretical calculation or the like, and supplies an assist amount signal Tc conforming to a state based on the signal Ts from the state detection means 191 and the pulser signal P from the pulser sensor 178 to the switch 193.

On the other hand, in an ordinary stopping condition (the vehicle speed V = 0 and the engine revolution number is equal to the preset value), if the accelerator signal A is received, then the assist amount setting means 192 performs starting only with the motor and changes over to the driving output power of the engine 182 in response to a signal of output driving torque, by time control of, for example, several milliseconds, or the like.

Furthermore, upon starting (starting from a condition wherein the engine is cold), if the accelerator signal A is received, the assist amount setting means 192 reads the signal P from the pulser sensor 178 and supplies to the switch 193 an assist amount signal Tc so that generation may be performed by the generator section of the motor-generator by an amount by which the signal P is larger than the preset revolution number of the engine to apply braking to the engine to decrease the assist amount.

The switch 193 has a switching function of software program control, and performs, based on the vehicle speed signal V supplied from the vehicle speed sensor, for example, in an ordinary stopping condition (the vehicle speed V = 0 and the engine revolution number is equal to the preset value), starting only with the motor and changes over, when the vehicle speed becomes equal to the preset vehicle speed, to the aimed torque signal Tt of the aimed torque calculation means 168 in response to the vehicle speed signal V.

For example, the switch (SW1) 193 selects, when the vehicle speed signal V = 0 is detected, the signal Tc of starting only with the motor (a solid line of SW1), but when the signal V of the preset vehicle speed is detected, selects the aimed torque signal Tt (dotted line of SW1) and outputs the signal Tt to the motor control means 180.

Therefore, with an engine such as an internal combustion engine, the driving output power is controlled by control of intake/exhaust of air for combustion of fuel, the fuel and so forth. (Depending upon the case, also control of the ignition timing, control of the compression ratio and/or so forth are performed.)

Meanwhile, also the driving output power is different depending upon use (when cold, hot), a variation of the environment (the external air temperature, the atmospheric pressure or the like), an individual difference or the like.

In the motor of the generator-motor 172, the driving output power is controlled by electric input control.

Consequently, since the motor is controlled and driven by electric control (voltage, current, a frequency, a pulse and so forth) based on an electric signal from the torque sensor, a continuous and smooth running driving power which is fast in response time and quick is obtained upon changing over or simultaneous use of the driving force of the vehicle.

In this manner, with the controlling apparatus for a hybrid car, since it comprises the assist discrimination means for additionally using or changing over the driving output power of the generator-motor in response to the driving output power of the engine, even during regeneration control, the running driving torque which exhibits a short response time and is quick can be kept stably.

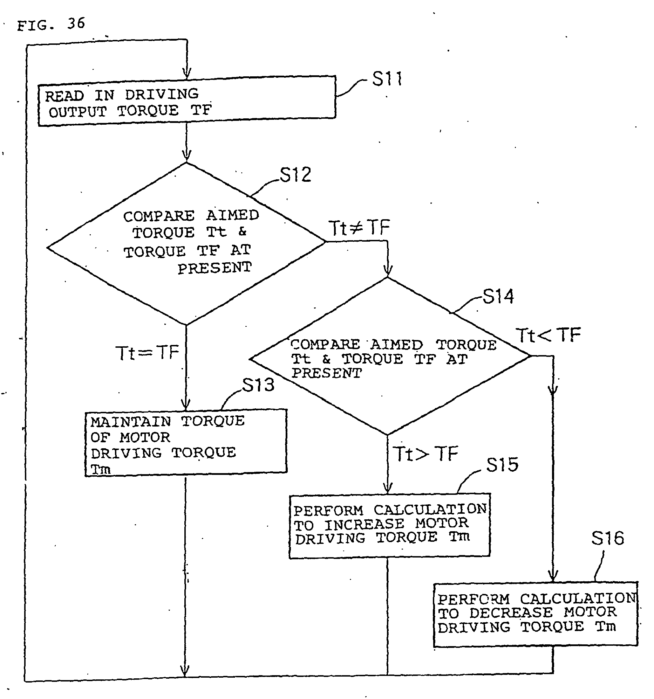

FIG. 36 shows a control flow diagram of torque amount feedback.

FIG. 36 shows a control flow wherein the engine 182 is driven always in a fixed condition, and a variation of a driving output power TF by an actual running condition of the vehicle, a use condition upon starting or the like, an individual unique characteristic and so forth of the engine 182 is detected by the torque sensor 165 provided on the common output power shaft (propeller shaft) 173 mechanically connected to the engine 182 and, when the accelerator signal amount A requested by the driver is not sufficient with the output power amount Te only of the engine 182, the motor section of the motor-generator 183 is driven so that the short amount is made up for with the driving output power Tm while the torque amount TF of the common output power shaft is always fed back.

In S11, the torque sensor 165 is provided on the common output power shaft (propeller shaft) 173 to which the engine 182 and the motor-generator 183 are mechanically connected, and the substantial driving output torque TF which drives the wheels is read in.

Then, in S12, comparison between the aimed torque Tt based on the signal V from the vehicle speed sensor 162 and the signal A from the accelerator sensor 164 and the substantial driving output torque TF at present is performed, and-in the case of Tt = TF, the control advances to S13, but in the case of Tt ≠ TF, the control advances to S14.

In S13, the aimed torque Tt and the substantial driving output torque TF at present are equal to each other.

In this instance, the torque of the output driving torque Tm of the motor is maintained.

This keeps fixed the signal Mc to be supplied to the motor section of the motor-generator 183 from the motor control means 180.

Meanwhile, in S14, while the aimed torque Tt and the substantial driving output torque TF at present are not equal to each other, the substantial output torque TF at present with respect to the aimed torque Tt is compared in magnitude, and in the case of Tt > TF, the control advances to S15, but in the case of Tt < TF, the control advances to S16.

S15 is a case wherein the aimed torque Tt is higher than the substantial driving output torque TF at present, and increase of the output driving torque Tm of the motor is performed.

This increases the signal Mc to be supplied to the motor section of the motor-generator 183 from the motor control means 180.

Meanwhile, S16 is a case wherein the aimed torque Tt is smaller than the substantial driving output torque TF at present, and decrease of the output driving torque Tm of the motor is performed.

This decreases the signal Mc to be supplied to the motor section of the motor-generator 183 from the motor control means 180.

Or, generation is performed by the generator section of the motor-generator 183 to apply a braking force to the driving output torque TF.

## Claims

1. A hybrid car driving apparatus comprising:
- an engine (171; 182) connected to a driving wheel (176);
- a generator-motor (172; 183) connected, at a joining portion, to a crankshaft of said engine (171; 182) or to said driving wheel (176) for outputting running driving force with power supplied from a battery;
- a controlling apparatus (163; 177) for controlling driving of said engine (171; 182) and driving of said generator-motor (172; 183),
said controlling apparatus (163; 177) comprising:
- target torque calculation means (168) for calculating a target torque signal (Tt) based on an accelerator operation amount signal (A) from an accelerator sensor (164) detecting an amount of a driver's accelerator operation and a vehicle speed signal (V) from a vehicle speed sensor (162) detecting the speed of said vehicle;
- torque detection means (166) for detecting an actual torque (Tf) at or downstream of said joining portion of driving output power of said engine (171; 182) and of said generator-motor (172; 183);
- target throttle opening means (169) for calculating a target throttle opening signal (θ) based on said target torque signal (Tt) from said target torque calculation means (168) and an engine revolution signal (P; N) from an engine revolution sensor (167; 178);
wherein, for outputting running driving force, said controlling apparatus (163; 177) controls said engine (171; 182) based on said target engine throttle opening signal (θ) from said target throttle opening means (169) and, by means of controller means (170), controls said generator-motor (172; 183) based on said target torque signal (Tt) from said target torque calculation means (168) and said actual torque signal (Tf) from said torque detection means (166) fed back to said controller means (170); and
said controlling apparatus further comprising:
assist discrimination means (190) for additionally using or changing over the driving output power of said generator-motor (172; 183) in response to the driving output power of said engine (171; 182),
**characterized in that** said assist discrimination means (190) supplies an assist amount signal (Tc) based on said accelerator operation amount signal (A), said vehicle speed signal (V) and said engine revolution signal (P; N) and comprises a switch (193) to be switched on the basis of said vehicle speed signal (V) for selecting said target torque amount signal (Tt) or said assist amount signal (Tc) to drive said generator-motor (172; 183).

2. The hybrid car driving apparatus according to claim 1,
**characterized in that**
said assist discrimination apparatus (190) comprises:
- a state detection means (191) for supplying a state signal (Ts) based on said accelerator operation amount signal (A), said vehicle speed signal (V) and said engine revolution signal (P; N); and
- an assist amount setting means (192) for supplying said assist amount signal (Tc) based on said state signal (Ts).

3. The hybrid car driving apparatus according to claim 2, **characterized in that** both said state detection means (191) and said assist amount setting means (192) each comprise a memory for storing values of said state signal (Ts) and said assist amount signal (Tc), respectively.

4. The hybrid car driving apparatus according to claim 2 or 3, **characterized in that** said state detection means (191) supplies said state signal (Ts) based on whether or not said vehicle speed signal (V) is zero and whether the number of revolutions of said engine (171; 182) is lower or higher than a preset value.

5. The hybrid car driving apparatus according to any one of claims 1 to 4, **characterized in that** said switch (193) selects said assist amount signal (Tc) for starting only with said generator-motor (172; 183) when said vehicle speed signal (V) is zero and said engine revolution number is equal to a preset value and changes over to said target torque amount signal (Tt) when said vehicle speed signal (V) becomes equal to a preset value.

## Patentansprüche

1. Hybridfahrzeug-Antriebsvorrichtung, umfassend:
eine Maschine (171; 182), die mit einem Antriebsrad (176) verbunden ist;
einen Generatormotor (172; 183), der an einem Verbindungsabschnitt mit einer Kurbelwelle der Maschine (171; 182) oder mit dem Antriebsrad (176) verbunden ist, um mit der von einer Batterie gelieferten Leistung eine Fahrantriebskraft abzugeben;
eine Steuervorrichtung (163, 177) zum Steuern des Antriebs der Maschine (171; 182) und des Antriebs des Generatormotors (172; 183),
wobei die Steuervorrichtung (163; 177) umfasst:
ein Soll-Drehmomentberechnungsmittel (168) zum Berechnen eines Soll-Drehmomentsignals (Tt) auf der Grundlage eines Fahrhebelbetätigungsmaßsignals (A) von einem Fahrhebelsensor (164), der ein Maß einer Fahrhebelbetätigung eines Fahrers erfasst, und eines Fahrzeuggeschwindigkeitssignals (V) von einem Fahrzeuggeschwindigkeitssensor (162), der die Geschwindigkeit des Fahrzeugs erfasst;
ein Drehmomenterfassungsmittel (166), das ein Ist-Drehmoment (Tf) am Verbindungsabschnitt der Antriebsausgangsleistung der Maschine (171; 182) und des Generatormotors (172; 183) oder stromabseitig desselben erfasst;
ein Soll-Drosselklappenöffnungsmittel (169) zum Berechnen eines Soll-Drosselklappenöffnungssignals (θ) auf der Grundlage des Soll-Drehmomentsignals (Tt) vom Soll-Drehmomentberechnungsmittel (168) und eines Maschinenumdrehungssignals (P; N) von einem Maschinenumdrehungssensor (167; 178);
wobei für die Abgabe der Fahrantriebskraft die Steuervorrichtung (163; 177) die Maschine (171; 182) auf der Grundlage des Soll-Maschinendrosselklappenöffnungssignals (θ) vom Soll-Drosselklappenöffnungsmittel (169) steuert und mittels des Steuermittels (170) den Generatormotor (172; 183) auf der Grundlage des Soll-Drehmomentsignals (Tt) vom Soll-Drehmomentberechnungsmittel (168) und des Ist-Drehmomentsignals (Tf) vom Drehmomenterfassungsmittel (166), das zum Steuermittel (170) zurückgeführt wird, steuert; und wobei
die Steuervorrichtung ferner umfasst:
ein Unterstützungsunterscheidungsmittel (190) für eine zusätzliche Anwendung oder Übernahme der Antriebsausgangsleistung des Generator-motors (172; 183) in Reaktion auf die Antriebsausgangsleistung der Maschine (171; 182),
**dadurch gekennzeichnet, dass**
das Unterstützungsunterscheidungsmittel (190) ein Unterstützungsmaßsignal (Tc) auf der Grundlage des Fahrhebelbetätigungsmaßsignals (A), des Fahrzeuggeschwindigkeitssignals (V) und des Maschinenumdrehungssignals (P; N) liefert und einen Schalter (193) umfasst, der auf der Grundlage des Fahrzeuggeschwindigkeitssignals (V) umgeschaltet wird, um das Soll-Drehmomentmaßsignal (Tt) oder das Unterstützungsmaßsignal (Tc) zum Antreiben des Generatormotors (172; 183) auszuwählen.

2. Hybridfahrzeug-Antriebsvorrichtung nach Anspruch 1,
**dadurch gekennzeichnet, dass**
die Unterstützungsunterscheidungsvorrichtung (190) umfasst:
ein Zustandserfassungsmittel (191) für die Lieferung eines Zustandssignals (Ts) auf der Grundlage des Fahrhebelbetätigungsmaßsignals (A), des Fahrzeuggeschwindigkeitssignals (V) und des Maschinenumdrehungssignals (P; N); und
ein Unterstützungsmaßeinstellmittel (192) zum Liefern des Unterstützungsmaßsignals (Tc) auf der Grundlage des Zustandssignals (Ts).

3. Hybridfahrzeug-Antriebsvorrichtung nach Anspruch 2, **dadurch gekennzeichnet, dass** sowohl das Zustandserfassungsmittel (191) als auch das Unterstützungsmaßeinstellmittel (192) jeweils einen Speicher zum Speichern von Werten des Zustandssignals (Ts) bzw. des Unterstützungsmaßsignals (Tc) umfassen.

4. Hybridfahrzeug-Antriebsvorrichtung nach Anspruch 2 oder 3, **dadurch gekennzeichnet, dass** das Zustandserfassungsmittel (191) das Zustandssignal (Ts) auf der Grundlage der Tatsache liefert, ob das Fahrzeuggeschwindigkeitssignal (V) gleich 0 ist, und ob die Drehzahl der Maschine (171; 182) niedriger oder höher als ein vorgegebener Wert ist.

5. Hybridfahrzeug-Antriebsvorrichtung nach irgendeinem der Ansprüche 1 bis 4, **dadurch gekennzeichnet, dass** der Schalter (193) das Unterstützungsmaßsignal (Tc) zum Starten nur mit dem Generatormotor (172; 183) auswählt, wenn das Fahrzeuggeschwindigkeitssignal (V) gleich 0 ist und die Maschinendrehzahl gleich einem vorgegebenen Wert ist, und zum Soll-Drehmomentmaßsignal (Tt) wechselt, wenn das Fahrzeuggeschwindigkeitssignal (V) gleich einem vorgegebenen Wert wird.

## Revendications

1. Dispositif d'entraînement pour automobile hybride, comprenant :
- un moteur (171, 182) connecté à une roue motrice (176),
- un moteur-générateur (172, 183) connecté, à une partie de jonction, à un vilebrequin dudit moteur (171, 182) ou à ladite roue motrice (176) pour fournir une force d'entraînement en marche à partir d'une puissance fournie par une batterie (21),
- un dispositif de commande (163, 177) pour commander l'entraînement du moteur (171, 182) et l'entraînement dudit moteur-générateur (172, 183), ledit dispositif de commande (163, 177) comprenant :
- des moyens de calcul de couple cible (168) pour calculer un couple cible (Tt) sur la base d'un signal d'ampleur de mise en oeuvre d'accélérateur (A) provenant d'un capteur d'accélération (164) détectant une ampleur de mise en oeuvre d'accélération du conducteur et d'un signal de vitesse de véhicule (V) provenant d'un capteur de vitesse de véhicule (162) détectant la vitesse dudit véhicule ;
- des moyens de détection de couple (166) détectant un couple réel (Tf) à ou en aval de ladite partie de jonction, de la puissance fournie d'entraînement dudit moteur (171, 182) et dudit moteur-générateur (172, 183) ;
- des moyens d'ouverture de papillon cible (169) pour calculer un signal d'ouverture de papillon de moteur cible (θ) sur la base d'un signal de couple cible (Tt) provenant desdits moyens de calcul de couple cible (168) et d'un signal de vitesse de rotation de moteur (P, N) provenant d'un capteur de vitesse de rotation de moteur (167, 178) ;
dans lequel, pour fournir une force d'entraînement en marche, ledit dispositif de commande commande ledit moteur (171, 182) sur la base dudit signal d'ouverture de papillon de moteur cible (θ) provenant desdits moyens d'ouverture de papillon cible (169) et, au moyen de moyens de commande (170) commande ledit moteur-générateur (172, 183) sur la base dudit signal de couple cible (Tt) provenant des moyens de calcul de couple cible (168) et ledit signal de couple réel (Tf) provenant des moyens de détection de couple (166) réintroduit dans les moyens de commande (170) ; et
dans lequel ledit dispositif de commande comprend en outre :
- des moyens de distinction d'assistance (190) pour additionnellement, utiliser ou modifier la puissance fournie d'entraînement dudit moteur-générateur (172, 183) en réponse à la puissance d'entraînement dudit moteur (171, 182),
**caractérisé en ce que** lesdits moyens de distinction d'assistance (190) fournissent un signal d'ampleur d'assistance (Tc) sur la base du signal d'ampleur de mise en oeuvre d'accélérateur (A), du signal de vitesse du véhicule (V) et du signal de vitesse de rotation de moteur (P, N) et comprend un commutateur (193) à commuter sur la base du signal de vitesse de véhicule (V) pour sélectionner ledit signal d'ampleur de couple cible (Tt) ou ledit signal d'ampleur d'assistance (Tc) pour entraîner ledit moteur-générateur (172, 183).

2. Dispositif d'entraînement pour automobile hybride selon la revendication 1, **caractérisé en ce que** lesdits moyens de distinction d'assistance (190) comprennent :
- des moyens de détection d'état (191) pour fournir un signal d'état (Ts) sur la base du signal d'ampleur de mise en oeuvre d'accélérateur (A), du signal de vitesse de véhicule (V) et du signal de vitesse de rotation de moteur (P, N) ; et
- des moyens de fixation d'ampleur d'assistance (192) pour fournir un signal d'ampleur d'assistance (Tc) sur la base dudit signal d'état (Ts).

3. Dispositif d'entraînement pour automobile hybride selon la revendication 2, **caractérisé en ce que** lesdits moyens de détection d'état (191) et lesdits moyens de fixation d'ampleur d'assistance (192) comprennent chacun une mémoire pour enregistrer des valeurs dudit signal d'état (Ts) et du signal d'ampleur d'assistance (Tc), respectivement.

4. Dispositif d'entraînement pour automobile hybride selon la revendication 2 ou 3, **caractérisé en ce que** lesdits moyens de détection d'état (191) fournissent un signal d'état (Ts) selon que, oui ou non, ledit signal de vitesse de véhicule (V) est égal à zéro et que le nombre de tours de rotation du moteur (171, 182) est inférieur ou supérieur à une valeur pré-établie.

5. Dispositif d'entraînement pour automobile hybride, selon l'une des revendications 1 à 4, **caractérisé en ce que** ledit commutateur (193) sélectionne ledit signal d'ampleur d'assistance (Tc) pour démarrer uniquement avec ledit moteur-générateur (172, 183) lorsque ledit signal de vitesse de véhicule est égal à zéro et que le nombre de tours de rotation du moteur est égal à une valeur pré-établie et passe audit signal d'ampleur de couple cible (Tt) lorsque ledit signal de vitesse de véhicule (V) devient égal à une valeur pré-établie.
